# EUROPEAN PATENT SPECIFICATION

(11) **EP 3 689 080 B1**
(45) Date of publication and mention of the grant of the patent: **04.11.2026**
(21) Application number: 18766271.3
(22) Date of filing: 14.09.2018
(51) Int. Cl.: H04W 74/00, H04W 74/0833, H04W 74/0836, H04W 74/0838

(54) **USER EQUIPMENT AND BASE STATION PARTICIPATING IN PRIORITIZED RANDOM ACCESS**
BENUTZERGERÄT UND BASISSTATION MIT BETEILIGUNG AM PRIORISIERTEN DIREKTZUGRIFF
ÉQUIPEMENT UTILISATEUR ET STATION DE BASE INTERVENANT DANS UN ACCÈS ALÉATOIRE PAR ORDRE DE PRIORITÉ

(30) Priority: 28.09.2017 EP 17193835
(43) Date of publication of application: 05.08.2020
(73) Proprietor: Panasonic Intellectual Property Corporation of America, Torrance, CA 90503 (US)
(72) Inventor: SHAH, Rikin, 63225 Langen (DE); SUZUKI, Hidetoshi, Osaka 540-6207 (JP); KUANG, Quan, 63225 Langen (DE); TAO, Ming-Hung, 63225 Langen (DE)
(74) Representative: Grünecker Patent- und Rechtsanwälte PartG mbB
(86) International application number: PCT/EP2018/074937
(87) International publication number: WO 2019/063321

(56) References cited:
- QUALCOMM ET AL: "Converged proposal for prioritized random access for NR", vol. RAN WG2, no. Berlin, Germany; 20170821 - 20170825, 20 August 2017 (2017-08-20), XP051318525, Retrieved from the Internet <URL:http://www.3gpp.org/ftp/Meetings_3GPP_SYNC/RAN2/Docs/> [retrieved on 20170820]
- QUALCOMM INCORPORATED: "Prioritized random access in NR", vol. RAN WG2, no. Hangzhou, China; 20170515 - 20170519, 14 May 2017 (2017-05-14), XP051275416, Retrieved from the Internet <URL:http://www.3gpp.org/ftp/Meetings_3GPP_SYNC/RAN2/Docs/> [retrieved on 20170514]
- INTEL CORPORATION: "Differentiation of RACH parameters", vol. RAN WG2, no. Qingdao, China; 20170627 - 20170629, 17 June 2017 (2017-06-17), XP051307278, Retrieved from the Internet <URL:http://www.3gpp.org/ftp/tsg_ran/WG2_RL2/TSGR2_AHs/2017_06_NR/Docs/> [retrieved on 20170617]
- HUAWEI ET AL: "Further discussion on prioritized RACH", vol. RAN WG2, no. Hangzhou, China; 20170515 - 20170519, 14 May 2017 (2017-05-14), XP051275593, Retrieved from the Internet <URL:http://www.3gpp.org/ftp/Meetings_3GPP_SYNC/RAN2/Docs/> [retrieved on 20170514]

## Description

### FIELD OF THE PRESENT DISCLOSURE

The present disclosure is directed to a user equipment and base station.

### TECHNICAL BACKGROUND

Currently, the 3rd Generation Partnership Project (3GPP) works at the next release (Release 15) of technical specifications for the next generation cellular technology, which is also called fifth generation (5G). At the 3GPP Technical Specification Group (TSG) Radio Access network (RAN) meeting #71 (Gothenburg, March 2016), the first 5G study item, "Study on New Radio Access Technology" involving RAN1, RAN2, RAN3 and RAN4 was approved and is expected to become the Release 15 work item that defines the first 5G standard. The aim of the study item is to develop a "New Radio (NR)" access technology (RAT), which operates in frequency ranges up to 100 GHz and supports a broad range of use cases, as defined during the RAN requirements study (see e.g. 3GPP TR 38.913 "Study on Scenarios and Requirements for Next Generation Access Technologies", current version 14.3.0 available at www.3gpp.org.

One objective is to provide a single technical framework addressing all usage scenarios, requirements and deployment scenarios defined in TR 38.913, at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC may include scenarios with large number of devices with non-time critical data transfers such as smart wearables and sensor networks. The services eMBB and URLLC are similar in that they both demand a very broad bandwidth, however are different in that the URLLC service requires ultra-low latencies.

A second objective is to achieve forward compatibility. Backward compatibility to Long Term Evolution (LTE, LTE-A) cellular systems is not required, which facilitates a completely new system design and/or the introduction of novel features.

The fundamental physical layer signal waveform will be based on OFDM, with potential support of a non-orthogonal waveform and multiple access. For instance, additional functionality on top of OFDM such as DFT-S-OFDM, and/or variants of DFT-S-OFDM, and/or filtering/windowing is further considered. In LTE, CP-based OFDM and DFT-S-OFDM are used as waveform for downlink and uplink transmission, respectively. One of the design targets in NR is to seek a common waveform as much as possible for downlink, uplink and sidelink.

Besides the waveform, some basic frame structure(s) and channel coding scheme(s) will be developed to achieve the above-mentioned objectives. The study shall also seek a common understanding on what is required in terms of radio protocol structure and architecture to achieve the above-mentioned objectives. Furthermore, the technical features which are necessary to enable the new RAT to meet the above-mentioned objectives shall be studied, including efficient multiplexing of traffic for different services and use cases on the same contiguous block of spectrum.

Since the standardization for the NR of 5^{th} Generation systems of 3GPP is at the very beginning, there are several issues that remain unclear. For instance, there has been discussion on supporting a prioritization mechanism for the random access procedure performed between user equipments and base stations. However, definite agreements on how to effectively implement a prioritized random access have not been reached.

3GPP DRAFT, R2-1708720, by Qualcomm et. Al, titled *"Converged proposal for prioritized random access for NR",* teaches that prioritization can be achieved by the UE by using the backoff parameter value and the power ramping step based on the type of its access request. For instance, the gNB sends a backoff indicator to all UEs, and the UE calculates an offset on top depending on the type of access request.

Similarly, 3GPP drafts R2-1704901 by QUALCOMM INCORPORATED titled "Prioritized random access in NR*",* R2-1707029 by INTEL CORPORATION titled "Differentiation of RACH parameters*",* and R2-1705117 by HUAWEI ET AL titled "Further discussion on prioritized RACH*",* also disclose solutions where the prioritization of the random access stays primarily with the UE.

### SUMMARY

One non-limiting and exemplary aspect facilitates providing an improved random access procedure in which different entities (UE, gNBs) are participating. The invention is defined by the appended claims. The invention is explained in Aspect 1. Examples, aspects and embodiments not necessarily falling under the scope of the claims are provided in the application to better understand the invention.

In one general first aspect, the techniques disclosed here feature a user equipment which comprises a processor and a transmitter as follows. A processor, upon being triggered by one of a plurality of random access events, determines random access transmission parameters to be used for transmitting a random access message to a base station that controls a radio cell of a mobile communication system in which the user equipment is located. At least part of the random access transmission parameters are determined based on the random access event that triggered the transmission of the random access message and on random access configuration information. The random access configuration information associates each of a plurality of random access events with a set of random access transmission parameters among a plurality of random access transmission parameters usable by the user equipment to transmit a random access message to the base station. A transmitter transmits the random access message to the base station using the determined random access transmission parameters.

In one general first aspect, the techniques disclosed here feature a base station which comprises a receiver, a processor and a transmitter as follows. A receiver receives a random access message from a user equipment which is located in the radio cell of a mobile communication system controlled by the base station, the random access message being transmitted by the user equipment upon being triggered by one of a plurality of random access events. A processor determines random access transmission parameters used by the user equipment to transmit the random access message, and determines a backoff parameter to be used by the user equipment to determine a period of time the user equipment has at least to wait before starting another random access channel procedure. A transmitter transmits, in response to the transmitted random access message, a random access response message to the user equipment that includes the determined backoff parameter.

In one general second aspect, the techniques disclosed here feature a user equipment which comprises a transmitter, a receiver and a processor as follows. A transmitter, upon being triggered by one of a plurality of random access events, transmits a random access message to a base station controlling a radio cell of a mobile communication system in which the user equipment is located. A receiver receives from the base station, in response to the transmitted random access message, a random access response message including a backoff index. The processor determines a backoff time value, indicating a period of time the user equipment has at least to wait before starting another random access channel procedure, based on the received backoff index and on a backoff index table, which associates different backoff time values with backoff indexes and with at least one or more of the plurality of random access events that may trigger the transmission of a random access message.

It should be noted that general or specific embodiments may be implemented as a system, a method, an integrated circuit, a computer program, a storage medium, or any selective combination thereof.

Additional benefits and advantages of the disclosed embodiments will be apparent from the specification and Figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: shows an exemplary user and control plane architecture for the LTE eNB, gNB, and UE;
- **Fig. 3**: illustrates different subcarrier spacings 15kHz, 30kHz, and 60kHz and the resulting symbols durations;
- **Fig. 4**: illustrates the system information acquisition message exchange as currently discussed for 5g NR;
- **Fig. 5**: illustrates the messages exchanged between an eNB and a UE when performing a contention-based RACH procedure;
- **Fig. 6**: illustrates the messages exchanged between an eNB and a UE when performing a contention-free RACH procedure;
- **Fig.7**: illustrates the exemplary and simplified structure of a UE and an eNB,
- **Fig. 8**: illustrates a simple scenario with a UE being connected to a gNB1, and having neighboring cells respectively controlled by different gNBs,
- **Fig. 9**: illustrates different PRACH resources, including three dimensions thereof being time, frequency of the radio resources and the preamble sequences,
- **Fig. 10 and 11**: are sequence diagrams of respectively the UE and base station behavior according to one variant of the first embodiment,
- **Fig. 12 and 13**: are sequence diagrams of respectively the UE and base station behavior according to one variant of the second embodiment.

### DETAILED DESCRIPTION

### Basis of the present disclosure

### 5G NR system architecture and protocol stacks

As presented in the background section, 3GPP is working at the next release for the 5^{th} generation cellular technology, simply called 5G, including the development of a new radio access technology (NR) operating in frequencies ranging up to 100 GHz. 3GPP has to identify and develop the technology components needed for successfully standardizing the NR system timely satisfying both the urgent market needs and the more long-term requirements. In order to achieve this, evolutions of the radio interface as well as radio network architecture are considered in the study item "New Radio Access Technology". Results and agreements are collected in the Technical Report TR 38.804 v14.0.0..

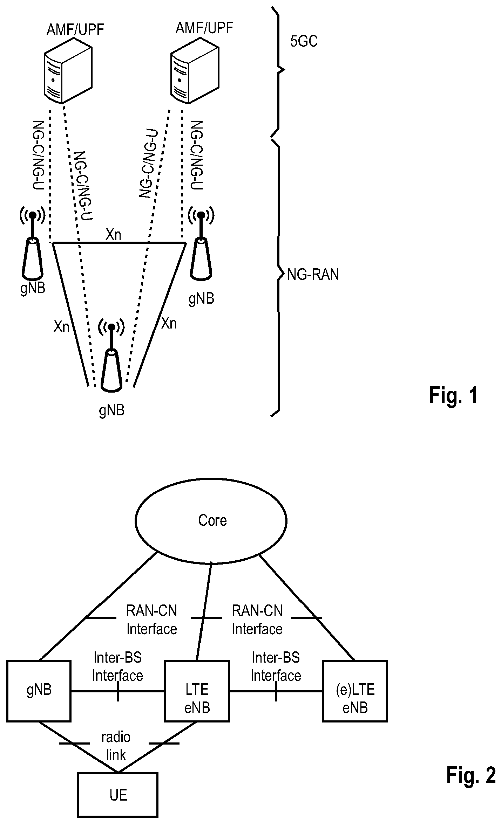

Among other things, there has been a provisional agreement on the overall system architecture. The NG-RAN (Next Generation - Radio Access Network) consists of gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) by means of the NG-C interface and to the UPF (User Plane Function) by means of the NG-U interface. The NG-RAN architecture is illustrated in **Fig. 1****,** as taken from the TS 38.300 v.0.4.1, section 4.

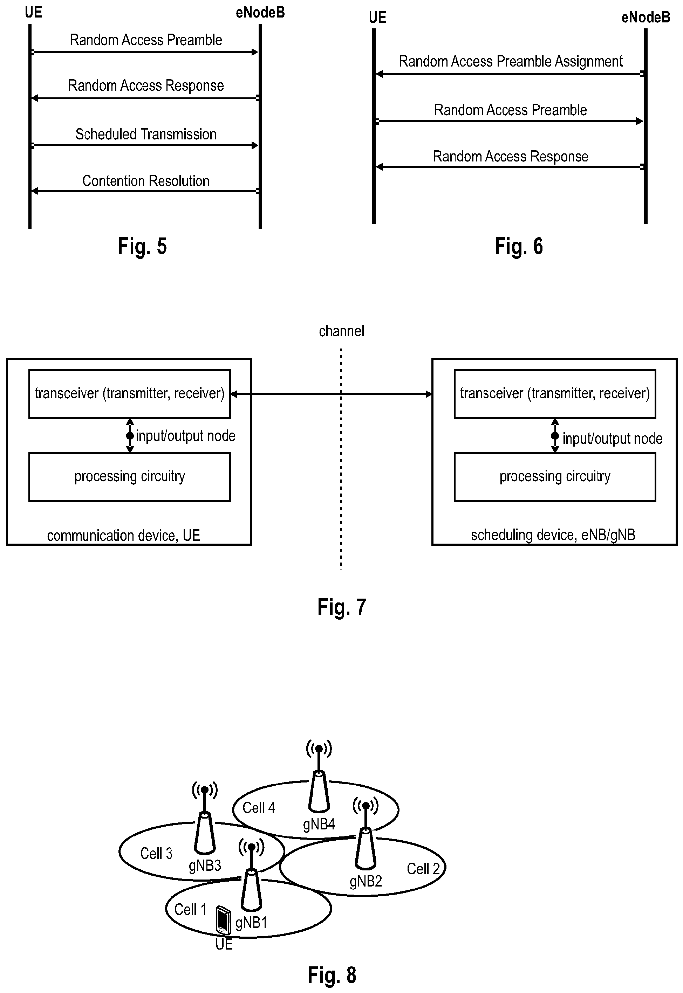

Various different deployment scenarios are currently being discussed for being supported, as reflected e.g. in 3GPP TR 38.801 v14.0.0. For instance, a non-centralized deployment scenario (section 5.2 of TR 38.801; a centralized deployment is illustrated in section 5.4) is presented therein, where base stations supporting the 5G NR can be deployed. **Fig. 2** illustrates an exemplary non-centralized deployment scenario and is based on Figure 5.2.-1 of said TR 38.301, while additionally illustrating an LTE eNB as well as a user equipment (UE) that is connected to both a gNB and an LTE eNB (which is to be understood as an eNB according to previous 3GPP standard releases such as for LTE and LTE-A). As mentioned before, the new eNB for NR 5G may be exemplarily called gNB.

An eLTE eNB, as exemplarily defined in TR 38.801, is the evolution of an eNB that supports connectivity to the EPC Evolved Packet Core) and the NGC (Next Generation Core).

The user plane protocol stack for NR is currently defined in TS 38.300 v0.4.1, section 4.4.1. The PDCP (Packet Data Convergence Protocol), RLC (Radio Link Control) and MAC (Medium Access Control) sublayers are terminated in the gNB on the network side. Additionally, a new access stratum (AS) sublayer (SDAP, Service Data Adaptation Protocol) is introduced above PDCP as described in sub-clause 6.5 of S TS 38.300 v1.0.0. The control plane protocol stack for NR is defined in TS 38.300, section 4.4.2. An overview of the Layer 2 functions is given in sub-clause 6, of TS 38.300. The functions of the PDCP, RLC and MAC sublayers are listed in sub-clauses 6.4, 6.3, and 6.2 of TS 38.300. The functions of the RRC layer are listed in sub-clause 7 of TS 38.300. The mentioned sub-clauses of TS 38.300.

The new NR layers exemplarily assumed at present for the 5G systems may be based on the user plane layer structure currently used in LTE(-A) communication systems. However, it should be noted that no final agreements have been reached at present for all details of the NR layers.

As identified in TR 38.913, use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC requires high connection density (1,000,000 devices/km² in an urban environment), large coverage in harsh environments, and extremely long-life battery for low cost devices (15 years).

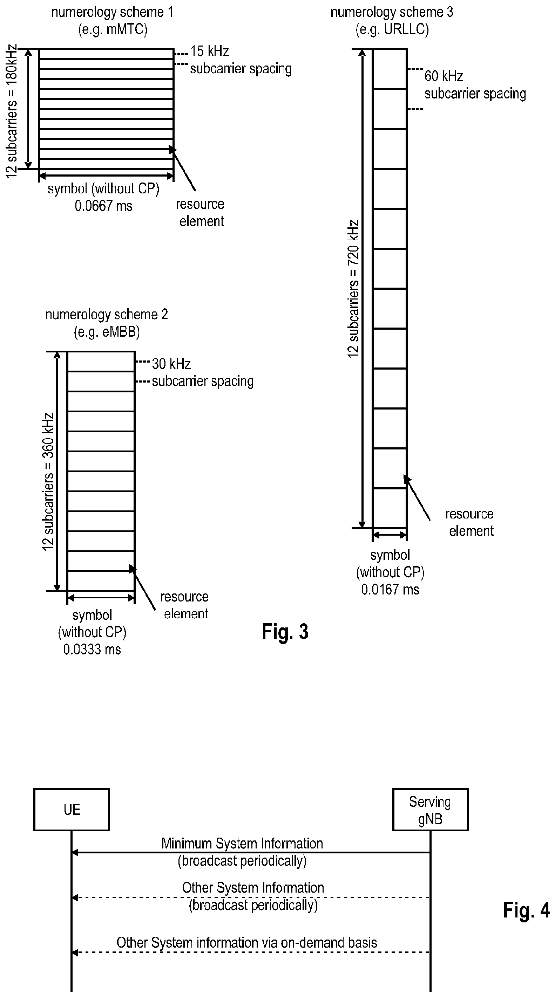

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may require a shorter symbol duration (and thus larger subcarrier spacing) and/or fewer symbols per scheduling interval (aka, TTI) than an mMTC service. Furthermore, deployment scenarios with large channel delay spreads require a longer CP duration than scenarios with short delay spreads. The subcarrier spacing should be optimized accordingly to retain the similar CP overhead. In 3GPP RAN1#84bis meeting (Busan, April 2016), it was agreed that it is necessary for NR to support more than one value of subcarrier-spacing. The values of subcarrier-spacing are derived from a particular value of subcarrier-spacing multiplied by N where N is an integer. In the RAN1 meeting RAN1#85 (Nanjing, May 2016) it was concluded as a working assumption that the LTE-based numerology including 15 kHz subcarrier spacing is the baseline design for the NR numerology. For the scaling factor N, N=2" was concluded as the baseline design assumption for the NR numerology. The down selection of numerology candidates might be done in future meetings. Correspondingly, subcarrier spacings of 15kHz, 30kHz, 60kHz... are being considered at the moment. **Fig. 3** exemplarily illustrates three different subcarrier spacings (15kHz, 30kHz, and 60kHz) and the corresponding symbol duration. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier, a resource grid of subcarriers and OFDM symbols is defined respectively for uplink and downlink. Each element in the resource grid is called a resource element and is identified based on the frequency index in the frequency domain and the symbol position in the time domain. Provisional definitions are currently being prepared in 3GPP TS 38.211 v1.0.0.

### LTE System Information Acquisition

In LTE, system information is structured by means of system information blocks (SIBs), each of which contains a set of functionally related parameters. The MIB (master information block) includes a limited number of the most frequently transmitted parameters which are essential for an initial access of the UE to the network. There are system information blocks of different types SIB1-SIB18 currently defined in LTE to convey further parameters, e.g. SIB1 includes parameters needed to determine if a cell is suitable for cell selection, as well as information about the time domain scheduling of the other SIBs, SIB2 for example includes common and shared channel information.

Three types of RRC (Radio Resource Control) messages can be used to transfer the system information, the MIB, the SIB1 message and SI messages. SIBs other than SIB1 are transmitted within system information messages (SI messages), of which there are several and which include one or more SIBs which have the same scheduling requirements (e.g. the same transmission periodicity). Depending on the content of the SI messages, the UE has to acquire different SI messages in idle and connected states; e.g. the 3^{rd} SI message with SIB5 (inter-frequency cell reselection information) needs to be acquired in idle state only.

More information on the system information can be found in the 3GPP Technical Specification TS 36.331 v14.4.0, section 5.2 "System information".

### NR System Information Acquisition

In 5G NR it is currently envisioned (although not finally agreed upon) that system information is generally divided into minimum system information and other system information. The minimum system information is periodically broadcast and comprises basic information required for initial access to a cell (such as System Frame Number, list of PLMN, Cell ID, cell camping parameters, RACH parameters). The minimum system information may further comprise information for acquiring any other SI broadcast periodically or provisioned via on-demand basis, e.g. suitable scheduling information in said respect. The scheduling information may for instance include as necessary the SIB type, validity information, SI periodicity and SI-window information. Correspondingly, the other system information shall encompass everything that is not broadcast in the minimum system information, e.g. cell-reselection neighbouring cell information.

The other SI may either be broadcast or provisioned in a dedicated manner, either triggered by the network or upon request from the UE, as illustrated in **Fig. 4****.** The other SI can be broadcast at a configurable periodicity and for a certain duration. It is a network decision whether the other SI is broadcast or delivered through dedicated UE-specific RRC signaling.

For the other SI that is actually required by the UE, before the UE sends the other SI request, the UE needs to know whether it is available in the cell and whether it is broadcast or not. For the UE in RRC_CONNECTED state, dedicated RRC signaling can be e.g. used for the request and delivery of the other SI.

In legacy LTE, the UE is always required to (re-)acquire system information when cell change occurs, and the UE is also required to re-acquire all the system information when the system information is changed (e.g. indicated by paging or an incremented, i.e. changed, value tag). For the new system in 5G NR, it is generally desired to reduce the need to re-acquire system information by identifying stored system information with a specific index/identifier, which is broadcast together with the minimum system information. It is assumed that some system information valid in one cell may be valid also in other cells. For example, the common radio resource configuration, the Access Class barring information, the UL carrier frequency and bandwidth, and the MBSFN (Multimedia Broadcast Single-Frequency Network) subframe configuration may be valid among multiple adjacent cells.

There are however no final agreements with regard to the system information in 5G NR.

### RACH procedure

No final agreement has been reached with regard to the RACH (Random Access Channel) procedure in 5G NR. As described in section 9.2 of TR 38.804 v14.0.0, the NR RACH procedure may support both contention-based and contention-free random access, in the same or similar manner as defined for LTE. Also, the design of the NR RACH procedure shall support a flexible messa ge-3 size, similar as in LTE.

The LTE RACH procedure will be described in the following in more detail, with reference to **Fig. 5 and 6****.** A mobile terminal in LTE can only be scheduled for uplink transmission, if its uplink transmission is time synchronized. Therefore, the Random Access Channel (RACH) procedure plays an important role as an interface between non-synchronized mobile terminals (UEs) and the orthogonal transmission of the uplink radio access. For instance, the Random Access in LTE is used to achieve uplink time synchronization for a user equipment which either has not yet acquired, or has lost, its uplink synchronization. Once a user equipment has achieved uplink synchronization, the eNodeB can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

LTE offers two types of random access procedures allowing access to be either contention based, i.e. implying an inherent risk of collision, or contention free (non-contention based). A detailed description of the LTE random access procedure can be also found in 3GPP TS 36.321, section 5.1. v14.1.0.

In the following the LTE contention-based random access procedure is being described in more detail with respect to **Fig. 5****.** This procedure consists of four "steps". First, the user equipment transmits a random access preamble on the Physical Random Access Channel (PRACH) to the eNodeB (i.e. message 1 of the RACH procedure). After the eNodeB has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions, an initial uplink resource assignment (grant) for the transmission of the first scheduled transmission and an assignment of a Temporary Cell Radio Network Temporary Identifier (T-CRNTI). This T-CRNTI is used by eNodeB to address the mobile(s) whose RACH preamble was detected until the RACH procedure is finished, since the "real" identity of the mobile at this point is not yet known by the eNodeB.

The user equipment monitors the PDCCH for reception of the random access response message within a given time window, which is configured by the eNodeB. In response to the RAR message received from the eNodeB, the user equipment transmits the first scheduled uplink transmission on the radio resources assigned by the grant within the random access response. This scheduled uplink transmission conveys the actual random access procedure message like for example an RRC connection request or a buffer status report.

In case of a preamble collision having occurred in the first of the RACH procedure, i.e. multiple user equipments have sent the same preamble on the same PRACH resource, the colliding user equipments will receive the same T-CRNTI within the random access response and will also collide in the same uplink resources when transmitting their scheduled transmission in the third step of the RACH procedure. In case the scheduled transmission from one user equipment is successfully decoded by eNodeB, the contention remains unsolved for the other user equipment(s). For resolution of this type of contention, the eNode B sends a contention resolution message (a fourth message) addressed to the C-RNTI or Temporary C-RNTI.

**Fig. 6** is illustrating the contention-free random access procedure of 3GPP LTE, which is simplified in comparison to the contention-based random access procedure. The eNodeB provides in a first step the user equipment with the preamble to use for random access so that there is no risk of collisions, i.e. multiple user equipments transmitting the same preamble. Accordingly, the user equipment is subsequently sending the preamble which was signaled by eNodeB in the uplink on a PRACH resource. Since the case that multiple UEs are sending the same preamble is avoided for a contention-free random access, essentially, a contention-free random access procedure is finished after having successfully received the random access response by the UE.

Thus, a similar or same RACH procedure as just explained in connection with Fig. 5 and 6 could be adopted in the future for the new radio technology of 5G. However, 3GPP is also studying a two-step RACH procedure for 5G NR, where a message 1, that corresponds to messages 1 and 3 in the four-step RACH procedure, is transmitted at first. Then, the gNB will respond with a message 2, corresponding to messages 2 and 4 of the LTE RACH procedure. Due to the reduced message exchange, the latency of the two-step RACH procedure may be reduced compared to the four-step RACH procedure. The radio resources for the messages are optionally configured by the network.

Furthermore, 3GPP has generally agreed that NR communication system should support prioritization of the random access, however without agreeing on the details on how this can be achieved in detail. This could involve the possibility to differentiate between different backoff parameters and power ramping values.

In contrast, in LTE systems the UEs perform basically the same random access procedure with the same set of configured parameters, e.g. a common backoff value, a common power ramping parameter and the radio resources for the PRACH (Physical Random Access Channel). Thus, a UE performs the random access procedure without any consideration of the purpose of the access request, i.e. why the random access procedure is performed in the first place.

In contrast thereto, prioritization of the random access procedure of different UEs is motivated by the need to support a broader set of service requirements in future NR systems and also by the desire to improve the robustness of the system. In more detail, different user services currently handled by the UE can also benefit from the random access prioritization. For instance, random access triggered for the URLLC service would benefit from having a fast access with a lower delay than needed for random access procedure triggered in the context of an eMBB service.

Further, different types of random access events have different access delay requirements, such that random access requests triggered in the UE by certain random access (RA) events should have higher priority than others. For instance, an RA event that is triggered by an RRC Connection Re-establishment should be handled with a shorter delay, than e.g. an RA event triggered by a UE trying to get initial access. Similarly, a UE in RRC_Connected state trying to use the random access procedure to get synchronized again could be given a higher priority than e.g. a UE in RRC_Idle trying to use random access to get initial access.

Moreover, random access requests triggered by certain RA events (for instance random access event 5, see below) may require further specific configuration parameters, such as a different numerology for sending the second message MSG2 from the gNB to the UE (see Fig. 5). Another aspect of the random access prioritization may involve that certain premium users may require faster access and higher success rate that other general users (e.g. having higher QoS, Quality of Service, parameters than other general users).

The following random access events are currently defined:
- **(Event 1):** Initial access from RRC_IDLE;
- **(Event 2):** RRC Connection Re-establishment procedure;
- **(Event 3):** Handover;
- **(Event 4):** DL data arrival during RRC_CONNECTED requiring random access procedure, e.g. when UL synchronisation status is "non-synchronised";
- **(Event 5):** UL data arrival during RRC_CONNECTED requiring random access procedure, e.g. when UL synchronisation status is "non-synchronised" or there are no PUCCH resources for SR available.
- **(Event 6):** Transition from RRC_INACTIVE to RRC_CONNECTED
- **(Event 7):** Beam Recovery

Events 1 to 6 that trigger a random access procedure are already known from LTE system, whereas Event 7 (beam recovery) is currently being discussed to be newly introduced for 5G NR systems.

Although random access prioritization has been generally agreed by 3GPP, no detailed solutions are yet available nor suggested. Correspondingly, there is a need for an improved random access procedure which allows prioritization.

### Detailed description of present disclosure

In the following, UEs, base stations, and procedures to meet this need will be described for the new radio access technology envisioned for the 5G mobile communication systems. Different implementations and variants will be explained as well. The following detailed disclosure was facilitated by the discussions and findings as described in the previous section "Basis of the present disclosure" and may be based at least on part thereof.

In general, it should be however noted that only few things have been actually agreed on with regard to the 5G cellular communication system such that many assumptions have to be made in the following so as to be able to explain the principles underlying the present disclosure in a clear and understandable manner. These assumptions are however to be understood as merely examples that should not limit the scope of the disclosure. A skilled person will be aware that the principles of the following disclosure and as laid out in the claims can be applied to different scenarios and in ways that are not explicitly described herein.

Moreover, terms of the procedures, entities, layer layers etc. used in the following are closely related to LTE/LTE-A systems or to terminology used in the current study items for 3GPP 5G, even though specific terminology to be used in the context of the new radio access technology for the next 3GPP 5G communication systems is not fully decided yet. Thus, terms could be changed in the 3GPP normative phase, without affecting the functioning of the aspects of the disclosure. Consequently, a skilled person is aware that the disclosure and its scope of protection should not be restricted to particular terms exemplary used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently-used terminology for 5G NR is gNB.

Fig. 7 illustrates a general, simplified and exemplary block diagram of a user equipment (also termed communication device) and a scheduling device (here assumed to be located in the base station, e.g. the LTE eNB or the gNB in 5G NR). The UE and eNB/gNB are communicating with each other over a (wireless) physical channel respectively using the transceiver.

The communication device may comprise a transceiver and processing circuitry. The transceiver in turn may comprise a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data which is further processed by the processing circuitry. The processing circuitry may also be responsible for performing processes of determining, deciding, calculating, measuring, etc. The transmitter may be responsible for performing the process of transmitting and other processes related thereto. The receiver may be responsible for performing the process of receiving and other processes related thereto.

In the present case as will become apparent from the below description of the different aspects and variants thereof, the processor can thus be exemplarily configured to determine certain transmission parameters that are needed for the process of transmitting the messages of the RACH procedure. Another example refers to the transmitter being in turn configured to be able to transmit the messages of the RACH procedure, e.g. using the transmission parameters determines by the processor. Conversely, a receiver can in turn be configured to be able to receive messages of the RACH procedure.

A simple and exemplary scenario is assumed in the following. As illustrated in Fig. 8 it is assumed that a UE is located in the coverage area of radio cell 1 which is controlled by gNB1. There are neighbouring radio cells 2, 3, and 4 respectively controlled by gNB2, gNB3, and gNB4.

One important procedure to be performed for various reasons is the random access channel, RACH, procedure (can also be termed random access procedure or RA procedure) between the UE and the gNB. Details on the random access procedure as known from LTE and as currently discussed for 5G NR are provided in previous sections, and reference is made thereto. For the purpose of describing and explaining the underlying concepts of the aspects presented below, a 4-step contention-based random access procedure is exemplarily assumed. It should be noted however that the concepts can also be applied to different random access procedures, such as a shorter 2-step procedure or the contention-free random access procedure.

### Aspect 1

An improved random access procedure will be described in the following according to the first embodiment which allows the differentiation between PRACH resources used by the UE, thus allowing to prioritize the random access procedure as necessary.

Prioritization of the random access procedure in this respect is to be understood for instance in that the backoff time value and/or the transmit power value to be used by the UE for the random access procedure can be adapted to better reflect the priority (and thus of facilitate meeting certain requirements) imposed e.g. by the UE or by the random access event triggering the random access. The backoff parameter is a parameter used to determine the period of time the UE has to wait between a previous (possibly unsuccessful) random access procedure and the start of a new random access procedure (by transmitting the first random access message with the preamble). The backoff parameter is for example provided by the gNB to the UE in case a collision is detected in the gNB, i.e. several UEs transmitted the same preamble using the same PRACH resources to the gNB. The backoff parameter is already known in LTE e.g. in TS 36.321 v14.3.0 in corresponding sections 5.1.4 and 7.2. The transmit power value indicates a value on which basis the UE determines with how much power it can transmit the first random access message of the random access procedure to the gNB, thus influencing the robustness of the scheduled transmission itself and also the chances of success in case of colliding RACH procedures between several UEs.

Consequently, prioritization of the random access procedure is particularly helpful in cases where collisions between different UEs using the same random access resources occur. The gNB, in those instances where it identifies collisions between random access procedure is performed by different UEs, may prioritize the further performance of the random access procedures of the different UEs by selecting the appropriate backoff parameter and assigning same to the different UEs.

According to this aspect, the UE participates in the prioritization of the random access procedure by selecting appropriate PRACH resources (being indicative of prioritization criteria) which the gNB can then differentiate in order to provide a backoff parameter to the UE to prioritize further random access. In order to implement the selection by the UE and the determination by the gNB, it is assumed that, at both the UE-side and the gNB-side, random access configuration information is available, associating specific PRACH resources (also termed random access transmission parameters) with specific prioritization criteria (e.g. circumstances on which basis the random access should be prioritized).

For example, the random access transmission parameters may include one or more of the following:
- a random access preamble sequence, transmitted with the random access message,
- time and frequency of the radio channel resources that are to be used by the UE when transmitting the random access message to the gNB,
- a transmit power value, to be used by the UE when transmitting the random access message to the gNB.

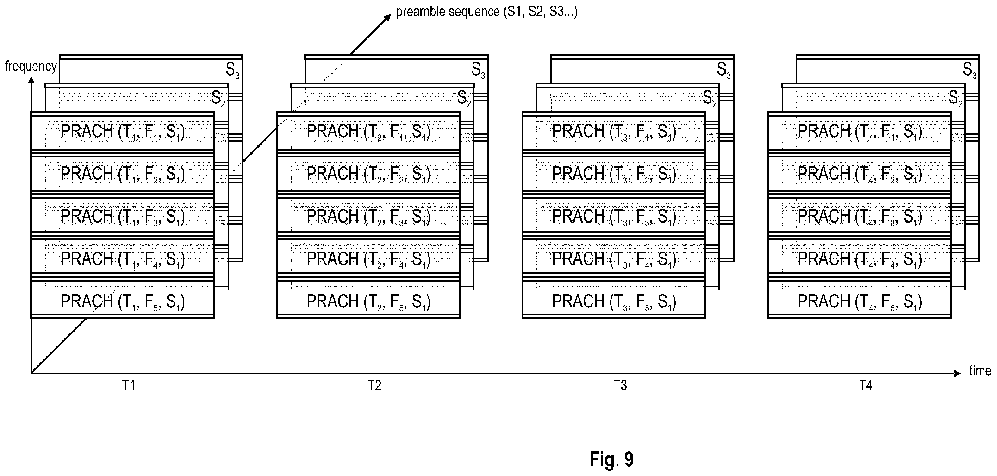

An exemplary and simplified illustration of these random access transmission parameters is presented in **Fig. 9****.** As apparent therefrom, it is exemplarily assumed that the PRACH resources are distinguishable based on the time (T1, T2, T3, T4) and frequency (F1, F2, F3, F4, F5) of the radio resources, as well as by the preamble sequence (S1, S2, S3) transmitted by the UE with the first RA message (three dimensions in the diagram of Fig. 9). The reader should be aware that the illustration and distinguishing parameters are merely examples, and less or more levels can be equally possible with respect to time, frequency, and sequences.

The transmit power, although being at parameter of the RA message transmission may not be used by the gNB to reliably distinguish one PRACH resource from another. As mentioned before, the transmit power can be used to prioritize one random access procedure compared to another random access procedure.

Similarly, the frequency bandwidth available for the PRACH transmission could be e.g. divided into frequency ranges to be differentiated for the purpose of random access prioritization. On the other hand, different time instances (e.g. subframes within a radio frame) could be used to differentiate the transmission of the random access message for the purpose of the random access prioritization.

In LTE there are defined 64 different preamble sequences, and way more than 64 preamble sequences may be defined in the future for 5G NR. Consequently, certain preamble sequences could be reserved for certain prioritization criteria (or for combination thereof), or several preamble sequences can be grouped together to be associated with a prioritization criteria (or for combination thereof).

According to one example, differentiation of the PRACH resources could be based on only the frequency of the radio resources used for transmitting the first random access message, such that certain frequencies or frequency ranges are unambiguously associated/reserved with certain prioritization criteria (such as one or more random access events). In a further similar example, differentiation of the PRACH resources could be based on only the time of the radio resources used for transmitting the first random access message, such that certain time instances are unambiguously associated/reserved with certain prioritization criteria (such as one or more random access events). As a further example, differentiation of the PRACH resources could be based on only the preamble sequences transmitted with the first random access message, such that one or more preamble sequences are unambiguously associated/reserved with certain prioritization criteria (such as one or more random access events).

Although the above examples differentiate the PRACH resources based on only one of the dimensions, it is equally possible that different combinations of the dimensions are suitably defined so as to differentiate the PRACH resources. This would be especially beneficial in those cases where we have a fine differentiation of the prioritization criteria. In that case in order to allow many different prioritization's, the differentiation of the PRACH resources could use more than one dimension. For instance, it might be possible to that certain groups of preamble sequences within certain frequency ranges are associated to a combination of prioritization criteria (such as random access events combined with use the services). Another exemplary definition of the PRACH resource division is that a set of PRACH resources e.g. reserved for a particular random access event (such as event 2, RRC Connection Re-establishment ) is further subdivided based on the user service (e.g. differentiating all or only one or two of the three user services currently defined). Consequently, the thus defined sub-sets of PRACH resources would each be associated to a combination of random access event(s) and user service(s).

Moreover, the random access can be prioritized on several different criteria or any combination thereof, including the following:
- a random access event, triggering the transmission of a random access message,
- a user service currently used by the user equipment, wherein the user service is one of a massive machine-type communication, mMTC, an enhanced mobile broadband, eMBB, and an ultra-reliable low-latency communication, URLLC,
- a contractual arrangement under which the user equipment is being operated by a user, such as respective quality of service requirements to be fulfilled,
- a subcarrier spacing defining the frequency distance between two contiguous subcarriers.

For example, a random access procedure triggered by certain random access events can be prioritized over a random access procedure triggered by other random access event(s). One example would be that RA event 1 (i.e. the initial access for a UE in RRC_IDLE state) could be prioritized lower than e.g. RA event 4 (i.e. downlink data arrival), by e.g. having a high (large) backoff parameter and/or a low transmit power. Similarly, RA event 2 (RRC Connection Re-establishment) could be also prioritized over RA event 1. For instance, all or only some of the RA events can be differentiated between one another for the RA prioritization. Another example is that random access events 6 and 7 could be prioritized higher irrespective of the user services. According to another example for a certain user service, such as URLLC, random access events 2, 3, 4 have higher priority while random access event has a low priority. According to another example for a certain user service, such as eMBB, random access events 2 and 3 have a high priority while random access events 4 and 5 have a low priority. According to another example, random access event 1 may have a low priority, even irrespective of the user service for which the random access procedure is performed.

Moreover, prioritization of the random access procedure can be based on the user service, i.e. whether data communication by the UE is currently done for either URLLC, eMBB or mMTC. As explained in detail in previous pages, each user service is suited to different data transmission scenarios with different requirements; e.g. URLLC requiring very small delays, eMBB although not being delay-critical requiring high peak data rates etc.. Random access procedures for URLLC could thus be prioritized over random access procedures for eMBB or mMTC, in order to facilitate meeting the delay requirements of the URLLC user service provided to the UE. For instance, all or only some of the user services can be differentiated between one another for the RA prioritization.

A user equipment is typically operated under a contract of the user with a network operator which can influence the general provision of user services to that UE compared to other UEs. For instance, premium users, typically paying more for their contract, might be serviced with a higher Quality of Service than standard users that correspondingly pay less money for their contract. This could also influence the priority with which the random access procedure is conducted between the UE and the gNB. For instance, the backoff time value used for random access procedures for a premium UE could be shorter than for random access procedures for a normal UE and/or the transmit power used for the random access message transmission could be higher. For instance, all or only some of the possible contractual arrangements can be differentiated between one another for the RA prioritization. QoS parameters for users may e.g. be exchanged between an MME and gNB via the S1 interface (for example using an SIAP Initial Context Setup Request, similar or same as already defined in TS 36.413 clause 8.3.1.2). Hence, the gNB knows the QoS value for the UE. When UE sends the RACH request message, the gNB is thus able to check the QoS parameters and, based on this QOS, calculates a suitable back-off value for the UE. For high QoS (premium user),the gNB sets a low backoff parameter while for a general/standard user, the gNB sets a high backoff parameter.

The subcarrier spacing may or may not have a direct relationship with the user service. As explained in previous pages, different numerologies, with different subcarrier spacings, are currently being defined for the different user services that shall be supported by 5G NR systems. A subcarrier spacing of 15kHz is currently envisioned for mMTC, a subcarrier spacing of 30 kHz is currently envisioned for eMBB, and a subcarrier spacing of 60 kHz is currently envisioned for URLLC. However, more than one subcarrier spacing can be used for a particular user service too. Instead of or in addition to the user-service-based prioritization, random access procedures could also be prioritized based on which subcarrier spacing is used for transmitting the first random access message. A subcarrier spacing of 60 kHz, with a very short symbol duration, could be prioritized higher than a 15 kHz subcarrier spacing having a comparatively long symbol duration. For instance, all or only some of the possible subcarrier spacings can be differentiated between one another for the RA prioritization.

The above list of criteria is not exhaustive, and further criteria, not explicitly mentioned above, could also be used to implement the discussed random access prioritization.

Although random access prioritization can be based on each of these single criteria alone, any meaningful combination thereof could also serve to prioritize random access procedures between one another. Only a few examples of possible combinations will be described in the following, while it should be clear to the reader that - even when not being explicitly mentioned - other combinations of criteria are equally possible.

For instance, a combination of certain random access event(s) for certain user service(s) could be used to distinguish the RA prioritization. For instance, for a specific user service, such as URLLC or eMBB, random access prioritization can be further distinguished based on the random access event that triggered the transmission of the random access message (i.e. triggered the random access procedure). According to one example, even when referring to the same service eMBB, random access prioritization for RA events 2 (RRC Connection Re-establishment procedure) and 3 (Handover) could be different from RA events 4 and 5 (respectively downlink and uplink data arrival in a non-synchronized state).

Moreover, although mentioned above, it is not strictly necessary that all the different prioritization criteria can be unambiguously distinguished, rather certain prioritization criteria can be grouped such that only the group of prioritization criteria can be distinguished on the gNB side. For instance, several random access events can be grouped together (such as random access events 2, 3, 4, 5), possibly on the assumption that the priority for a corresponding random access procedure would be similar. By grouping certain prioritization criteria the number of necessary different sets of PRACH resources is reduced, since less prioritization criteria (or combination thereof) have to be distinguished overall. Another example would be to group different contractual arrangements together as necessary, e.g. a premium user together with a prioritized user or user under a company in contrast to a standard user.

One general concept underlying the first aspect is to provide the gNB with more detailed information on the random access procedure and the communicating UE in an efficient manner so as to allow prioritization to be controlled by the gNB. Instead of using additional bits to convey certain information to the gNB, the set of available PRACH resources is divided such that the UE selects PRACH resources in accordance with the triggered random access procedure and/or the UE, and then the gNB can deduce information from the selected PRACH resources used by the UE to transmit the first RA message. Put differently, in order to be able to differentiate between these different prioritization criteria and combinations thereof, the UE is to use different PRACH resources (i.e. the parameters for the transmission of the first random access message) for the transmission of the first random access message. The gNB is able to distinguish the PRACH resources used by the UE and thus to determine the prioritization criteria involved for that particular random access procedure. according to one example, for each different random access event that triggered the transmission of the RA message, the UE first determines and then uses different PRACH resources (e.g. a different frequency or timing), thereby allowing the gNB to unambiguously determine which random access event triggered the random access procedure by the UE.

The necessary information (e.g. termed random access configuration information) how the UE should select appropriate PRACH resources based on the prioritization criteria and conversely how the gNB determines the prioritization criteria from the selected PRACH resources is available at both the UE and the gNB. One possible way would be that the necessary information is defined by a 3GPP technical specification, thus effectively being hard-coded into the operating system of the UE. There would be no need to exchange information in said respect between the UE and the gNB. However, this would not allow great flexibility in how to prioritize random access procedures.

Another possible way is that the gNB provides the necessary information to the UE, e.g. within system information. This would also involve the benefit that the PRACH parameterization (i.e. differentiation of PRACH resources) could be cell specific and thus could change from cell to cell. Correspondingly, when the UE moves from a source gNB to a target gNB, the new PRACH configuration information would be received by the UE either via the system information in the new radio cell or already via the RRC Connection Reconfiguration message.

As currently and provisionally envisioned in 5G (see also previous explanation is), system information can be provided in either minimum SI, and/or other SI and/or on-demand SI messages but could also be provided in dedicated RRC messages directly addressed to UE(s). Consequently, any of these messages or a combination thereof can be used to convey the RA configuration information to the UE. For instance, either all of or just part of the random access configuration information can be provided to the UEs in the radio cell, using the minimum SI message, while the remaining part of the random access configuration information can be provided to the UEs in the radio cell using e.g. the other SI, the on-demand SI, or UE-specifically within an RRC message destined to the UE. In a further variant, RA configuration information to enable important prioritization (e.g. for RA event 1, initial access) could be transmitted in the minimum SI, while RA configuration information for less important prioritization can be provided differently to the UEs. For example, the RA configuration information for random access events 2, 5, and 6 are conveyed by on-demand system information. On the other hand, for example the RA configuration information for RA events 4 and 7 (where low latency is required) can be conveyed by dedicated RRC messages (such as the RRC Connection Re-Configuration message).

This would reduce the overhead incurred by the minimum system information transmissions, which are assumed to occur periodically and rather frequently. Moreover by using e.g. the on-demand system information or even dedicated RRC messages, it is possible to provide different configuration information to different UEs and thus possibly to implement UE-specific prioritization.

In one exemplary variant, the random access configuration information in the UE and the gNB should be defined such that for every possible triggered random access procedure, the UE can derive which PRACH resources should be used, and the gNB conversely may derive from the used PRACH resources whether and how the random access procedure should be prioritized. On the other hand, the UE could simply use default or common PRACH resources in other cases not or not yet covered by the available random access configuration information.

In this embodiment, the UE, when performing the improved random access procedure, could simply determine the transmit power without reference to any of the prioritization criteria mentioned above. This would resemblance how the current LTE RACH procedure works.

On the other hand, random access prioritization according to the first embodiment is additionally or independently further implemented by determining in the UE an appropriate transmit power to be used for transmitting the first RA message of the RA procedure. When determining the RA transmission parameters in the UE, the UE needs to determine with how much radio power the RA message is to be transmitted. This determination can be done based on any of the above-mentioned prioritization criteria or combination thereof in a manner similar to how the UE determines the PRACH resources (to be distinguishable by the UE). A corresponding transmit power table could be provided in the UE associating certain transmit power values with certain prioritization criteria, thus allowing the UE to determine for each triggered random access procedure a suitable transmit power to be used when transmitting the first RA message of the RA procedure.

One simple and exemplary transmit power table that implements prioritization only based on the random access events is as follows.

| **Power ramping parameters** | | |
|---|---|---|
| **Event 1** | **Events 2, 3, 4, 5** | **Event 6 and 7** |
| -120 dbm | -104 dbm | -100 dbm |

Another simple and exemplary transmit power table that implements prioritization only based on the user service is as follows:

| **Power ramping parameters** | | |
|---|---|---|
| **eMBB (15kHz)** | **URLLC (30 kHz)** | **mMTC(60 kHz)** |
| -120 dbm | -112 dbm | -108 dbm |

A more detailed transmit power table that distinguishes some specific combinations of random access events, user services, and contractual situations is as follows.

| **Power ramping parameters** | | | | | |
|---|---|---|---|---|---|
| Event 6, 7 for all services | Event 2, 3, 4, 5 for URLLC | Event 2, 3 for eMBB | Event 4, 5 for eMBB | Event 1 for premium user | Event 1 for all services |
| -100 dbm | -104 dbm | -108 dbm, | -112 dbm | -116 dbm | -120 dbm |

As apparent from the above table, different user services (e.g. URLLC and eMBB) may thus have different transmit power parameters for the same RA event (e.g. RA event 2 and 3).

In a further alternative, instead of associating the power parameters with certain prioritization criteria, the power ramping parameters could be associated to respective set of PRACH resources (which in turn are associated to certain prioritization criteria).

The necessary information of the transmit power table is to be available in the UE. There are several options on how this can be achieved. As explained in a similar manner for the backoff index table (see details there), the transmit power table may be e.g. defined in a 3GPP technical specification or be transmitted to the UE by the gNB, for instance using system information broadcast in the radio cell of the gNB. The transmit power table could be provided either in the minimum SI, and/or other SI, and/or on-demand SI messages and/or in dedicated RRC messages directly addressed to the UE(s). Consequently, any of these messages or a combination thereof can be used to convey the RA configuration information to the UE.

Increasing the transmit power for the random access message transmission, as already known from LTE, could also be implemented according to a further variant of this aspect. Specifically, transmit power may be increased successively with each failed RA message transmission, e.g. based on a given transmit power step size. In the above case and exemplarily assuming a random access procedure for RA event 1, the UE would thus begin transmitting the first RA message with a transmit power according to -120 dbm, and in case of random access failure, the UE would for the second try of transmitting the RA message use (assuming a 4 db step size) a transmit power according to -116 dbm, then -112 dbm for the third try, etc.

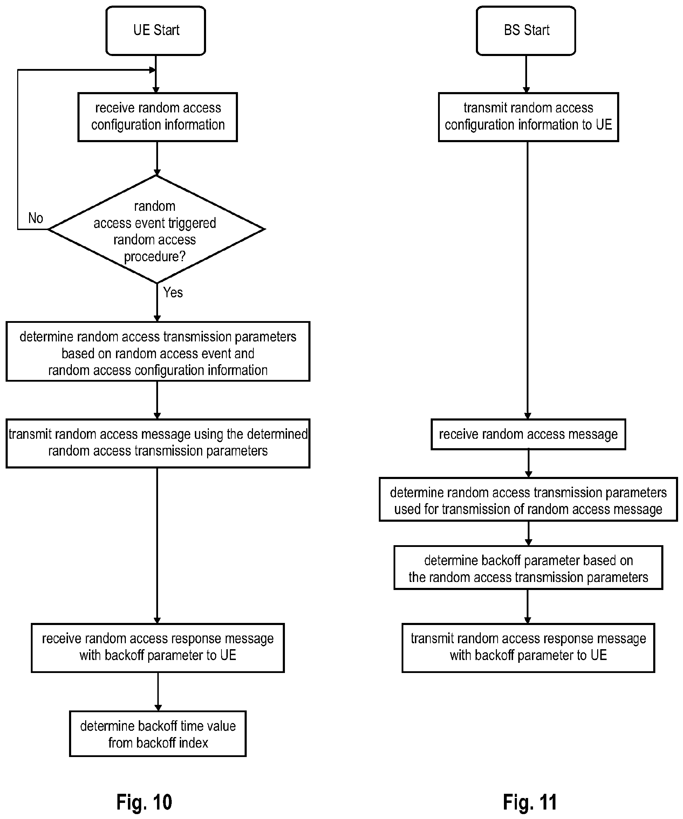

A simplified and exemplary illustration of the UE behavior for participating in the improved random access procedure of this aspect and variants thereof as explained herein is presented in **Fig. 10** in form of a sequence diagram. Further, a corresponding simplified and exemplary illustration of the gNB behavior for participating in the improved random access procedure of this aspect and variants thereof as explained herein is presented in **Fig. 11** in form of a sequence diagram. Only for the sake of facilitating illustration, it is exemplarily assumed that the prioritization of the random access procedure is based on the random access event alone. A further exemplary assumption is that the UE is receiving suitable random access configuration information from the base station in accordance with any of the examples given above. It is then further assumed that eventually the random access procedure will be triggered in the UE by any of the plurality of random access events. Based on the previously received RA configuration information and taking into consideration the random access event triggering the random access procedure, the UE may then determine corresponding random access transmission parameters (also see one of the various examples above, for example distinguishable by frequency only) that are then used by the UE to transmit the first random access message to the gNB.

The gNB correspondingly receives the random access message from the UE and, based on the used random access transmission parameters and based on the corresponding random access configuration information, is able to determine which random access event triggered the random access procedure (i.e. the transmission of the random access message). Depending on the random access event and on the priority associated thereto, the gNB will determine the backoff parameter accordingly and, within the random access response message, provides said determined backoff parameter to the UE.

As briefly mentioned before, the gNB selects a suitable backoff parameter based on the random access transmission parameters and provides the selected backoff parameter to the UE using the random access response message. One possibility to transmit the backoff parameter is to reuse the corresponding backoff parameters defined for the LTE RACH procedure, according to which the backoff index can be encoded with 4 bits thus allowing for 16 different backoff indexes. The current definition is provided in 3GPP TS 36.321 v14.3.0 section 7.2 and is illustrated in the following:

| **Index** | **Backoff Parameter value (ms)** |
|---|---|
| 0 | 0 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | Reserved |
| 14 | Reserved |
| 15 | Reserved |

As apparent therefrom, backoff index values 13, 14 and 15 are currently reserved and could instead be used to encode very low backoff values, such as 0,5ms, 1ms, 2ms to allow further prioritization. A correspondingly adapted and exemplary backoff time table could be defined as follows:

| **Index** | **Backoff Parameter value (ms)** |
|---|---|
| 0 | 0 |
| 1 | 10 |
| 2 | 20 |
| 3 | 30 |
| 4 | 40 |
| 5 | 60 |
| 6 | 80 |
| 7 | 120 |
| 8 | 160 |
| 9 | 240 |
| 10 | 320 |
| 11 | 480 |
| 12 | 960 |
| 13 | 0,5 |
| 14 | 1 |
| 15 | 2 |

For instance, the gNB can indicate 0,5ms, 1ms, or 2ms e.g. when the random access is triggered by the random access event 5 and for URLLC. A higher backoff parameter value (e.g. 10ms) can be instructed by the gNB, e.g. when the random access is triggered by the random access event 5 and for eMBB.

On the other hand, instead of reusing the backoff index definition of LTE, a completely different backoff time table can be defined for 5G NR, also using more or less than 4 bits to encode the backoff index.

According to further variants of this aspect, the selection of the PRACH resources can also be based on the subcarrier spacing that the gNB should use for transmitting the random access response message. In more detail, a UE in connected state monitors usually the PDCCH/PDSCH using a corresponding subcarrier spacing (e.g. depending on the user service, as explained above) and upon transmitting the first random access message monitors radio resources during the RAR receiving window in order to receive the random access response message from the gNB. Usually, the random access response message is transmitted by the gNB using a reference numerologies, thus a reference subcarrier spacing, irrespective of the user service the UE is currently using. In such circumstances, the UE is thus required to process and monitor for two different numerologies at the same time, which would increase the UE complexity. In order to avoid this extra complexity, according to a further variant of the aspect, information as to which subcarrier spacing is currently used by the UE can be provided to the gNB such that the gNB, instead of using the reference numerologies, uses the corresponding same numerology for transmitting the random access response message to the UE.

Correspondingly, the PRACH resources available to transmit the random access message by the UE can further be divided based on the subcarrier spacing, such that by the UE using those specific PRACH resources, the gNB is able to deduce which subcarrier spacing it should use to transmit the random access response message. When in operation, the UE thus determines the PRACH resources based on the subcarrier spacing the gNB should use to transmit the random access response message, and transmits the random access message to the gNB using those determined PRACH resources.

This improved variant of the aspect can be for example used for one of the random access events, such as event 4 or 5 related to the downlink and uplink transmission of data, where the UE is already connected and may be already communicating based on a numerologies (i.e. subcarrier spacing) different from the reference numerology (i.e. reference subcarrier spacing). There is less need for an initial access by the UE, since the UE is then not in connected mode and thus not already monitoring based on a particular subcarrier spacing of a user service; in said case the gNB may use the reference numerology (i.e. the reference subcarrier spacing) to transmit the random access response message.

For instance, a set of PRACH resources reserved for random access event 4, is further subdivided based on the possible subcarrier spacings, thus creating three sub-sets for the combination of random access event 4 with respectively a subcarrier spacing of 15, 30 or 60 kHz.

In the same manner as explained already for the previous cases, the random access configuration information necessary to differentiate based on the subcarrier spacing explained above, can be provided to the UE e.g. using system information (e.g. minimum SI, other-SI, on-demand SI, dedicated RRC messages; for details refer to previous pages).

According to a further improved variant of the first aspect, the prioritization of the random access procedure by using different backoff parameters can also be implemented in certain scenarios in the UE. In more detail, as explained above the gNB would select a suitable backoff parameter on the basis of the selected PRACH resources which are presumed to be indicative of the prioritization criteria on the UE side.

However as explained above, variants of the first aspect allow to group certain prioritization criteria, such as certain random access events. In said exemplary case, it is not possible for the gNB to distinguish, based on used PRACH resources, the random access event within the group of random access events that actually triggered the random access procedure in the UE. In those cases however, prioritization of the random access procedure within a group of random access events could be accomplished on the UE side, which knows the actual random access event that triggered the random access procedure.

Correspondingly, the UE determines PRACH resources associated with the group of random access events that includes the random access event actually triggering the random access procedure. Subsequently, these determined PRACH resources are used by the UE to transmit the first random access message to the gNB, which in turn may derive from the used PRACH resources the corresponding group of random access events and thus determine a suitable backoff parameter. The dependent backoff parameter can then be conveyed to the UE using the random access response message.

According to this variant of the first aspect, the UE may determine the actual backoff time value based on the received backoff parameter but further taking into account the actual random access event that triggered the random access procedure. The UE is thus able to further prioritize the random access procedure based on the actual random access event that triggered the random access procedure, in addition to any prioritization performed by the gNB.

A similar approach can also be used in scenarios where no PRACH resource differentiation is performed for certain prioritization criteria. For instance, in variant of the first aspect prioritization of the random access procedure by the gNB should only be performed for certain prioritization criteria, such as certain random access events or user services. For other prioritization criteria, common PRACH resources are used by the UE which do not encode any further information and thus do not allow the gNB to derive any information therefrom. For those cases where no prioritization is possible on the gNB side, prioritization of the random access procedure can nonetheless be implemented on the UE side which already has the necessary information without the need to subdivide the PRACH resources to encode information to be transmitted to the gNB. For instance, random access procedures that are triggered by RA events 1 and 2 could use the common PRACH resources, while the random access procedures triggered by other random access events could use dedicated PRACH resources as explained in connection with the improved random access procedure above. If common PRACH resources are used by the UE, then, as explained above, according to one example, prioritization of the random access procedure could be accomplished on the UE side, which knows e.g. the prioritization criteria (such as the random access event and/or the user service) to be used, and thus can select a backoff parameter (and transmit power).

### Aspect 2

In the second aspect a further implementation of random access procedure prioritization is described. Conceptually, the prioritization is handled as far as possible on the UE side, thus obviating the need to inform the gNB on the particulars of the triggered random access procedure, compared to the solution provided in Aspect 1. A similar approach was described in connection with one particular variant of the first aspect.

Instead of differentiating between different PRACH resources (i.e. the random access transmission parameters) to provide the gNB with information on the prioritization criteria e.g. the random access event, it is initially assumed that the UE uses common PRACH resources to transmit the first random access message of a random access procedure to the gNB. This approach would then be the same or very similar to the current LTE random access procedure, in which all UEs perform the random access procedure with the same set of configured transmission parameters thereby not allowing the receiving side to distinguish for example between different random access events (different users may still be distinguished, though not identified, based on the preamble sequence transmitted with the random access message).

On the other hand, prioritization on the UE side can be implemented by distinguishing the prioritization criteria (as extensively discussed in Aspect 1; e.g. random access events, contractual arrangements, uses service, subcarriers spacing) and appropriately selecting the corresponding backoff time value and/or transmit power that reflects the priority associated with the corresponding prioritization criteria.

In more detail, for the second aspect a backoff time table (can also be termed backoff index table) is used in the UE to allow implementation of the random access prioritization, the backoff time table associating different backoff time values with both a backoff index (which is received from the gNB) and corresponding prioritization criteria (or combination of prioritization criteria). In a similar manner as explained for aspect 1, the prioritization of the random access procedure can be implemented based on several different criteria or any combination thereof, including the following:
- a random access event, triggering the transmission of a random access message,
- a user service currently used by the user equipment, optionally wherein the user service is one of a massive machine-type communication, mMTC, an enhanced mobile broadband, eMBB, and an ultra-reliable low-latency communication, URLLC,
- a contractual arrangement under which the user equipment is being operated by a user, such as respective quality of service requirements to be fulfilled,
- a subcarrier spacing defining the frequency distance between two contiguous subcarriers.

Further details on the different criteria were already presented in connection with Aspect 1, and in order to avoid repetitions, the reader is referred to these sections of the description relating to Aspect 1. In one example, the MME configures QoS parameter to UE (for example: using a NAS Attach Accept message, as already defined in 3gpp TS 24.301 clause 5.5.1.2.2). Based on the QoS value (i.e. reflecting a contractual arrangement), the UE calculates a backoff value and/or a power ramping parameter from the table, as explained further. For instance, a premium user UE uses higher power ramping parameter and lower backoff value than general user UE.

Correspondingly, different backoff time values could be appropriately associated with prioritization criteria (or a combination thereof) so as to reflect the respective priority associated therewith. A simple example of a backoff index table is presented below, distinguishing the backoff time values based on the received backoff index value ("index" in table exemplarily between 0 and 15) and on the basis of the random access event that triggered the random access procedure during which the backoff index is received from the gNB.

| **Backoff time value (ms)** | | | |
|---|---|---|---|
| Index | Event 1 | Event 2, 3, 4, 5 | Event 6 and 7 |
| 0 | 0 | 5 | 10 |
| 1 | 5 | 10 | 15 |
| 2 | 10 | 15 | 20 |
| 3 | 15 | 20 | 25 |
| 4 | ... | ... | ... |
| 5 | ... | ... | ... |
| ... | ... | ... | ... |
| 15 | ... | ... | ... |

One more complex example of the backoff index table is presented below.

| **Backoff time value (ms)** | | | | | | |
|---|---|---|---|---|---|---|
| Index | Event 6 and 7 for all services | Event 2, 3, 4, 5 for URLLC | Event 2, 3 for eMBB | Event 4, 5 for eMBB | Event 1 for premium user | Event 1 for all services |
| 0 | 0 | 2 | 4 | 6 | 8 | 10 |
| 1 | 5 | 7 | 9 | 11 | 13 | 15 |
| 2 | 10 | 12 | 14 | 16 | 18 | 20 |
| 3 | .... | .... | .... | .... | .... | .... |
| 4 | .... | .... | .... | .... | .... | .... |
| 5 | .... | .... | .... | .... | .... | .... |
| | .... | .... | .... | .... | .... | .... |
| 15 | .... | .... | .... | .... | .... | .... |

As apparent from the above table, different user services (e.g. URLLC and eMBB) may thus have different backoff time values for the same RA event (e.g. RA event 2 and 3).

As apparent from the above exemplary backoff time table, the backoff index table in this case allows defining a range of the backoff time value based on the backoff index the received from the gNB (e.g. from 0 to 10 ms for index 0), while the UE, based on the prioritization criteria (e.g. random access event, user service, contractual arrangement) selects the suitable backoff time value within a set range (e.g. 4 ms in case of RA event 2 and eMBB). Thus, using the backoff index table it is possible to prioritize the random access procedure by the UE for certain RA events or user services (or combinations thereof) etc.

The necessary information on the backoff index table can be provided to the UE in different ways, as explained in a similar manner for the random access configuration information of the first aspect. Correspondingly, one possible way would be that the necessary information is defined by a 3GPP technical specification, thus effectively being hard-coded into the operating system of the UE. Another possible way is that the gNB provides the necessary information on the backoff index table to the UE, e.g. within system information. As currently and provisionally envisioned in 5G, system information can be provided in either minimum SI, and/or other SI and/or on-demand SI messages and/or in dedicated RRC messages directly addressed to the UE(s). Consequently, any of these messages or a combination thereof can be used to convey backoff index table information to the UE.

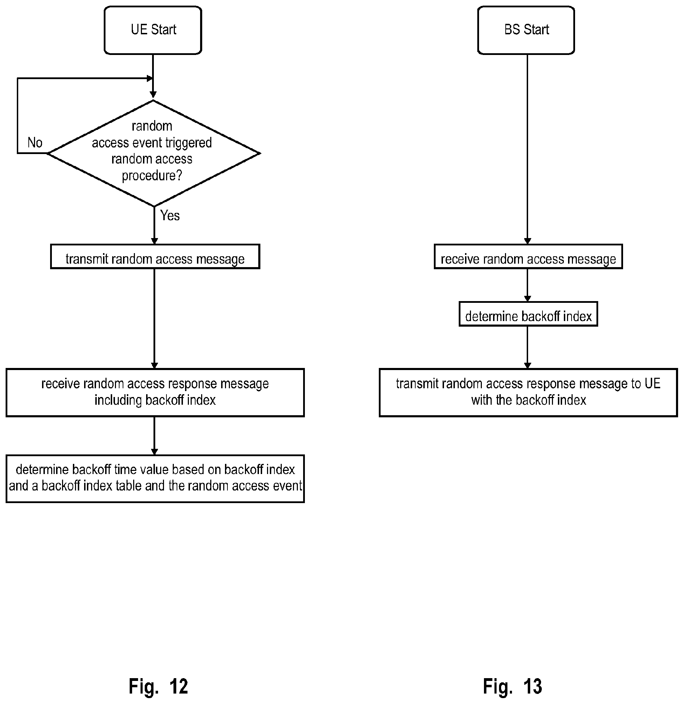

A simplified and exemplary illustration of the UE behavior for participating in the improved random access procedure of this second aspect and variants of thereof as explained herein is presented in **Fig. 12** in form of a sequence diagram. Further, a corresponding simplified and exemplary illustration of the gNB behavior for participating in the improved random access procedure of this aspect and variants of thereof as explained herein is presented in **Fig. 13** in form of a sequence diagram.

As apparent therefrom, it is assumed that a random access procedure will be eventually triggered in the UE, thus triggering the transmission of the first random access message from the UE to the gNB. In contrast to the core concept of aspect 1, explained above, common PRACH resources are used by the UE to transmit the triggered random access message to the gNB, i.e. using PRACH resources (i.e. time and frequency of radio resources, preamble sequence, also in one option the transmit power as explained below, see also Fig. 9) without reference to any of the prioritization criteria (such as RA event, user service, subcarrier spacing, contractual arrangement).

In turn, the base station, receiving the random access message, will then determine in a usual manner a backoff index (see e.g. LTE RACH procedure, as explained before), and the determined backoff index is then conveyed to the UE as part of the random access response (RAR) message. Based on this received backoff index, the UE can then determine the actual backoff parameter value using the backoff time table as explained above additionally taking into consideration the prioritization criteria (such as a random access event, and/or user service, and/or contractual arrangement, and/or subcarrier spacing).

In a similar or same manner as for the first aspect, the UE, when performing the improved random access procedure according to this second aspect, could simply determine the transmit power without reference to any of the prioritization criteria mentioned above. This would resemble how the current LTE RACH procedure works.

On the other hand, random access prioritization according to the second aspect can be additionally or independently further implemented by determining in the UE an appropriate transmit power to be used for transmitting the first RA message of the RA procedure. When determining the RA transmission parameters in the UE, the UE needs to determine with how much radio power the RA message is to be transmitted. This determination can be done based on any of the above-mentioned prioritization criteria or combination thereof in a manner similar to how the UE determines the backoff time value. A corresponding transmit power table could be provided in the UE associating certain transmit power values with certain prioritization criteria, thus allowing the UE to determine for each triggered random access procedure a suitable transmit power to be used when transmitting the first RA message of the RA procedure.

As explained in connection with the first aspect, one simple and exemplary example of a transmit power table that implements prioritization only based on the random access events is as follows.

| **Power ramping parameters** | | |
|---|---|---|
| **Event 1** | **Events 2, 3, 4, 5** | **Event 6 and 7** |
| -120 dbm | -104 dbm | -100 dbm |

Another simple and exemplary transmit power table that implements prioritization only based on the user service is as follows:

| **Power ramping parameters** | | |
|---|---|---|
| **eMBB (15kHz)** | **URLLC (30 kHz)** | **mMTC(60 kHz)** |
| -120 dbm | -112 dbm | -108 dbm |

A more detailed transmit power table that distinguishes some specific combinations of random access events, user services, and contractual situations is as follows.

| **Power ramping parameters** | | | | | |
|---|---|---|---|---|---|
| Event 6 and 7 for all services | Event 2, 3, 4, 5 for URLLC | Event 2 and 3 for eMBB | Event 4 and 5 for eMBB | Event 1 for premium user | Event 1 for all services |
| -100 dbm | -104 dbm | -108 dbm, | -112 dbm | -116 dbm | -120 dbm |

As apparent from the above table, different user services (e.g. URLLC and eMBB) may thus have different transmit power parameters for the same RA event (e.g. RA event 2 and 3).

The necessary information of the transmit power table is to be available in the UE. There are several options on how this can be achieved. As explained in a similar manner for the first aspect, the transmit power table may be e.g. defined in a 3GPP technical specification or be transmitted to the UE by the gNB, for instance using system information broadcast in the radio cell of the gNB. The transmit power table could be provided either in the minimum SI, and/or other SI, and/or on-demand SI messages and/or in dedicated RRC messages directly addressed to the UE(s). Consequently, any of these messages or a combination thereof can be used to convey the RA configuration information to the UE.

Increasing the transmit power for the random access message transmission, as already known from LTE, could also be implemented according to a further variant of this second aspect. Specifically, transmit power is increased successively with each failed RA message transmission, e.g. based on a given transmit power step size. In the above cases and exemplarily assuming a random access procedure for RA event 1, the UE would thus begin transmitting the first RA message with a transmit power according to -120 dbm, and in case of random access failure, the UE would for the second try of transmitting the RA message use a transmit power according to -116 dbm, then -112 dbm for the third try, etc.

In the present Aspect 2, using different transmission powers for the RA message transmission in order to prioritize the random access procedure is particularly beneficial in view of that no differentiation of PRACH resources occur. Thus, the possibility of collisions with other UEs during the random access remains high, compared to the improved random access procedure of Aspect 1 according to which different PRACH resources are used for different prioritization criteria. Increasing transmission power, e.g. for certain important random access events (e.g. random access event 2 - RRC Connection Re-Establishment), increases the chances that the random access procedure for that important random access event succeeds compared to random access procedures that are triggered in another UE by a less important random access event (e.g. Random access event 1 - initial access).

### Hardware and Software Implementation of the present disclosure

The present disclosure can be realized by software, hardware, or software in cooperation with hardware. Each functional block used in the description of each aspect described above can be partly or entirely realized by an LSI such as an integrated circuit, and each process described in the each aspect may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

Further, the various aspects may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different aspects may individually or in arbitrary combination be subject matter to another aspect.

It would be appreciated by a person skilled in the art that numerous variations and/or modifications may be made to the present disclosure as shown in the specific aspects. The present aspects are, therefore, to be considered in all respects to be illustrative and not restrictive.

## Claims

1. A user equipment comprising:
a processor, which, upon being triggered by one of a plurality of random access events, is configured to determine random access transmission parameters to be used for transmitting a random access message to a base station that controls a radio cell of a mobile communication system in which the user equipment is located,
wherein at least part of the random access transmission parameters are determined based on the random access event that triggered the transmission of the random access message and on random access configuration information, wherein the random access configuration information associates each of the plurality of random access events with a set of random access transmission parameters among a plurality of random access transmission parameters usable by the user equipment to transmit a random access message to the base station, and
wherein the at least part of the random access transmission parameters comprises at least one or more of:
• a random access preamble sequence, transmitted with the random access message,
• time and frequency of radio channel resources, to be used by the user equipment when transmitting the random access message to the base station,
wherein the association between the at least part of the random access transmission parameters and the plurality of random access events is such that each random access event is associated with different random access transmission parameters, wherein the association is such that the base station can unambiguously determine the one random access event that triggered the transmission of the random access message from the random access transmission parameters used by the UE to transmit the random access message, and
a transmitter, which is configured to transmit the random access message to the base station using the determined random access transmission parameters,
a receiver, which is configured to receive one part of the random access configuration information from the base station within minimum system information broadcast by the base station in the radio cell and to receive another part of the random access configuration information in a dedicated message transmitted from the base station and addressed to the user equipment.

2. The user equipment according to claim 1,
wherein the part of the random access transmission parameters is associated to one of or a combination of two or more of the following:
• a random access event, triggering the transmission of a random access message,
• a user service currently used by the user equipment, optionally wherein the user service is one of a massive machine-type communication, mMTC, an enhanced mobile broadband, eMBB, and an ultra-reliable low-latency communication, URLLC,
• a contractual arrangement under which the user equipment is being operated by a user, such as respective quality of service requirements to be fulfilled,
• a subcarrier spacing defining the frequency distance between two contiguous subcarriers.

3. The user equipment according to claim 1 or 2, wherein one part of the random access transmission parameters is associated with a combination of one or more of the random access events and one or more of the user services, and/or
another part of the random access transmission parameters is associated with a combination of one or more of the random access events and one contractual arrangement.

4. The user equipment according to any of claims 1 to 3, further comprising:
the receiver, which is configured to receive the random access configuration information from the base station within system information broadcast by the base station in the radio cell,
or
the receiver, which is configured to receive the another part of the random access configuration information in further system information, this further system information being transmitted by the base station in the radio cell on demand, optionally wherein the one part of the random access configuration information comprises information on the association of one or more important random access event with a respective set of random access transmission parameters.

5. The user equipment according to any of claims 1 to 4,
wherein the processor is configured to determine a transmit power value based on the random access event that triggered the transmission and on the random access configuration information, and
wherein the transmitter is configured to transmit the random access message based on the determined transmit power value.

6. The user equipment according to any of claims 1 to 5, wherein the receiver is configured to receive from the base station, in response to the transmitted random access message, a random access response message including a backoff parameter to be used by the user equipment to determine a period of time the user equipment has at least to wait before starting another random access channel procedure,
optionally wherein the backoff parameter is determined by the base station for the user equipment based on the random access message transmitted by the user equipment to the base station and based on the random access configuration information.

7. The user equipment according to any of claims 1 to 6, wherein the processor is configured to determine, based on the random access configuration information, random access transmission parameters associated with a subcarrier spacing, which is to be used by the base station to transmit a random access response message to the user equipment, and
wherein the transmitter is configured to transmit the random access message to the base station using the determined random access transmission parameters, and
wherein the receiver is configured to monitor radio resources for incoming data transmission and a random access response message based on the subcarrier spacing on which basis the processor determined the random access transmission parameters,
wherein the receiver is configured to receive the random access response message from the base station based on the subcarrier spacing on which basis the processor determined the random access transmission parameters.

8. The user equipment according to any of claims 1 to 7, wherein the association between random access transmission parameters and the plurality of random access events is such that some but not all of the plurality of random access events are associated with different random access transmission parameters and such that the remaining random access events are associated with common random access transmission parameters,
the processor, upon being triggered by one of the remaining random access events, is configured to determine the common random access transmission parameters,
the transmitter is configured to transmit a second random access message to the base station using the determined common random access transmission parameters,
the receiver is configured to receive from the base station, in response to the transmitted second random access message, a second random access response message including a backoff index,
the processor is configured to determine a backoff time value, indicating a period of time the user equipment has at least to wait before starting another random access channel procedure, based on the received backoff index and on a backoff index table, which associates different backoff time values with backoff indexes and with the remaining random access events that may trigger the transmission of a random access message.

9. The user equipment according to any of claims 1 to 8, wherein the plurality of random access events comprise one or more of:
• Initial access from RRC_IDLE;
• Connection re-establishment procedure;
• Handover;
• Downlink data arrival that requires the user equipment to perform a random access channel procedure;
• Uplink data arrival that requires the user equipment to perform a random access channel procedure;
• State transition from an inactive state to a connected state;
• Recovery from a beam failure.
and/or
wherein the random access message is transmitted as the first message of a Random Access Channel, RACH, procedure performed by the user equipment with the base station,
optionally, wherein the RACH procedure consists of four steps, and the user equipment packet duplication status is transmitted together with any signalling message of the RACH procedure,
optionally, wherein the RACH procedure consists of two steps, and the user equipment packet duplication status is transmitted together with a RACH preamble and a handover complete message of the RACH procedure.

10. A base station comprising:
a receiver, which is configured to receive a random access message from a user equipment which is located in the radio cell of a mobile communication system controlled by the base station, the random access message being transmitted by the user equipment upon being triggered by one of a plurality of random access events,
a processor, which is configured to
determine random access transmission parameters used by the user equipment to transmit the random access message, and to
determine the one random access event that triggered the random access message based on the determined random access transmission parameters and random access configuration information,
wherein the random access configuration information associates each of the plurality of random access events with a set of random access transmission parameters among a plurality of random access transmission parameters usable by the user equipment to transmit the random access message to the base station, and
the processor, which is configured to determine based on the determined random access event, a backoff parameter to be used by the user equipment to determine a period of time the user equipment has at least to wait before starting another random access channel procedure,
a transmitter, which is configured to transmit, in response to the transmitted random access message, a random access response message to the user equipment that includes the determined backoff parameter,
the transmitter, which is configured to transmit one part of the random access configuration information from the base station within minimum system information broadcast by the base station in the radio cell and to transmit another part of the random access configuration information in a dedicated message transmitted from the base station and addressed to the user equipment.

11. The base station according to claim 10, wherein the transmitter is configured to broadcast the random access configuration information in its radio cell.

12. A method performed by a user equipment comprising the steps of:
upon being triggered by one of a plurality of random access events, determining random access transmission parameters to be used for transmitting a random access message to a base station that controls a radio cell of a mobile communication system in which the user equipment is located,
wherein at least part of the random access transmission parameters are determined based on the random access event that triggered the transmission of the random access message and on random access configuration information, wherein the random access configuration information associates each of the plurality of random access events with a set of random access transmission parameters among a plurality of random access transmission parameters usable by the user equipment to transmit a random access message to the base station, and
wherein the at least part of the random access transmission parameters comprises at least one or more of:
• a random access preamble sequence, transmitted with the random access message,
• time and frequency of radio channel resources, to be used by the user equipment when transmitting the random access message to the base station,
wherein the association between the at least part of the random access transmission parameters and the plurality of random access events is such that each random access event is associated with different random access transmission parameters, wherein the association is such that the base station can unambiguously determine the one random access event that triggered the transmission of the random access message from the random access transmission parameters used by the UE to transmit the random access message, and
transmitting the random access message to the base station using the determined random access transmission parameters,
receiving one part of the random access configuration information from the base station within minimum system information broadcast by the base station in the radio cell and receiving another part of the random access configuration information in a dedicated message transmitted from the base station and addressed to the user equipment.

13. A method performed by a base station comprising the steps of:
receiving a random access message from a user equipment which is located in the radio cell of a mobile communication system controlled by the base station, the random access message being transmitted by the user equipment upon being triggered by one of a plurality of random access events,
determining random access transmission parameters used by the user equipment to transmit the random access message, and
determining the one random access event that triggered the random access message based on the determined random access transmission parameters and random access configuration information,
wherein the random access configuration information associates each of the plurality of random access events with a set of random access transmission parameters among a plurality of random access transmission parameters usable by the user equipment to transmit the random access message to the base station, and
determining based on the determined random access event, a backoff parameter to be used by the user equipment to determine a period of time the user equipment has at least to wait before starting another random access channel procedure,
transmitting, in response to the transmitted random access message, a random access response message to the user equipment that includes the determined backoff parameter, transmitting one part of the random access configuration information from the base station within minimum system information broadcast by the base station in the radio cell and transmitting another part of the random access configuration information in a dedicated message transmitted from the base station and addressed to the user equipment.

## Patentansprüche

1. Endgerät, umfassend:
einen Prozessor, der bei Auslösung durch eines einer Vielzahl von Direktzugriffsereignissen zum Bestimmen von Direktzugriffs-Sendeparametern ausgebildet ist, die für das Senden einer Direktzugriffsnachricht an eine Basisstation zu verwenden sind, die eine Funkzelle eines Mobilkommunikationssystems steuert, in dem sich das Endgerät befindet,
wobei wenigstens ein Teil der Direktzugriffs-Sendeparameter basierend auf dem Direktzugriffsereignis, welches das Senden der Direktzugriffsnachricht ausgelöst hat, und auf Direktzugriffs-Konfigurationsinformationen bestimmt wird, wobei die Direktzugriffs-Konfigurationsinformationen jedes der Vielzahl von Direktzugriffsereignissen mit einer Menge von Direktzugriffs-Sendeparametern aus einer Vielzahl von Direktzugriffs-Sendeparametern verbindet, die vom Endgerät zum Senden einer Direktzugriffsnachricht an die Basisstation verwendbar sind, und
wobei der wenigstens eine Teil der Direktzugriffs-Sendeparameter wenigstens ein oder mehrere der folgenden Elemente umfasst:
• eine Direktzugriffs-Präambelsequenz, die mit der Direktzugriffsnachricht gesendet wird,
• Zeit und Frequenz von Funkkanalressourcen, die vom Endgerät beim Senden der Direktzugriffsnachricht an die Basisstation zu verwenden sind,
wobei das Verbinden zwischen dem wenigstens einen Teil der Direktzugriffs-Sendeparameter der Vielzahl von Direktzugriffsereignissen derart ist, dass jedes Direktzugriffsereignis mit unterschiedlichen Direktzugriffs-Sendeparametern verbunden ist, wobei die Verbindung derart ist, dass die Basisstation anhand der vom Endgerät zum Senden der Direktzugriffsnachricht verwendeten Direktzugriffs-Sendeparameter eindeutig das eine Direktzugriffsereignis bestimmen kann, welches das Senden der Direktzugriffsnachricht ausgelöst hat, und
einen Sender, der zum Senden der Direktzugriffsnachricht an die Basisstation unter Verwendung der bestimmten Direktzugriffs-Sendeparameter ausgebildet ist,
einen Empfänger, der zum Empfangen von einem Teil der Direktzugriffs-Konfigurationsinformationen von der Basisstation innerhalb der von der Basisstation in der Funkzelle gesendeten Mindestsysteminformation und zum Empfangen von einem weiteren Teil der Direktzugriffs-Konfigurationsinformationen in einer dedizierten Nachricht, die von der Basisstation gesendet wird und an das Endgerät gerichtet ist, ausgebildet ist.

2. Endgerät nach Anspruch 1,
wobei der Teil der Direktzugriffs-Sendeparameter mit einem oder einer Kombination von zwei oder mehreren der folgenden Elemente verbunden ist:
• ein Direktzugriffsereignis, welches das Senden einer Direktzugriffsnachricht auslöst,
• ein vom Endgerät derzeit genutzter Benutzerdienst, wobei der Benutzerdienst optional eine Massive Machine-type Communication (mMTC), ein Enhanced Mobile Broadband (eMBB) und eine Ultra-reliable Low-latency Communication (URLLC) sein kann,
• eine vertragliche Vereinbarung, nach der das Endgerät von einem Benutzer betrieben wird, wie beispielsweise die zu erfüllenden Anforderungen an die Dienstqualität,
• ein Hilfsträgerabstand, der den Frequenzabstand zwischen zwei benachbarten Hilfsträgern definiert.

3. Endgerät nach Anspruch 1 oder 2, wobei ein Teil der Direktzugriffs-Sendeparameter mit einer Kombination aus einem oder mehreren der Direktzugriffsereignisse und einem oder mehreren der Benutzerdiensten verbunden ist, und/oder
ein weiterer Teil der Direktzugriffs-Sendeparameter mit einer Kombination aus einem oder mehreren der Direktzugriffsereignisse und einer vertraglichen Vereinbarung verbunden ist.

4. Endgerät nach einem der Ansprüche 1 bis 3, ferner umfassend:
den Empfänger, der zum Empfangen der Direktzugriffs-Konfigurationsinformationen von der Basisstation innerhalb von von der Basisstation in der Funkzelle übertragenen Systeminformationen ausgebildet ist,
oder
den Empfänger, der zum Empfangen des weiteren Teils der Direktzugriffs-Konfigurationsinformationen in weiteren Systeminformationen ausgebildet ist, wobei diese weiteren Systeminformationen von der Basisstation in der Funkzelle auf Anforderung gesendet werden, wobei optional der eine Teil der Direktzugriffs-Konfigurationsinformationen Informationen zur Verbindung von einem oder mehreren wichtigen Direktzugriffsereignissen mit einer jeweiligen Menge von Direktzugriffs-Sendeparametern umfasst.

5. Endgerät nach einem der Ansprüche 1 bis 4,
wobei der Prozessor zum Bestimmen eines Sendeleistungswerts basierend auf dem Direktzugriffsereignis, welches das Senden ausgelöst hat, und auf den Direktzugriffs-Konfigurationsinformationen ausgebildet ist, und
wobei der Sender zum Senden der Direktzugriffsnachricht basierend auf dem bestimmten Sendeleistungswert ausgebildet ist.

6. Endgerät nach einem der Ansprüche 1 bis 5, wobei der Empfänger zum Empfangen von der Basisstation als Reaktion auf die gesendete Direktzugriffsnachricht einer Direktzugriffs-Antwortnachricht ausgebildet ist, die einen Backoff-Parameter umfasst, der vom Endgerät zu verwenden ist, um eine Zeitdauer zu bestimmen, die das Endgerät wenigstens warten muss, bevor es einen weiteren Direktzugriffs-Kanalvorgang einleitet,
wobei der Backoff-Parameter optional von der Basisstation für das Endgerät basierend auf der vom Endgerät an die Basisstation gesendeten Direktzugriffsnachricht und basierend auf den Direktzugriffs-Konfigurationsinformationen bestimmt wird.

7. Endgerät nach einem der Ansprüche 1 bis 6, wobei der Prozessor zum Bestimmen, basierend auf den Direktzugriffs-Konfigurationsinformationen, von Direktzugriffs-Sendeparametern ausgebildet ist, die mit einem Hilfsträgerabstand verbunden sind, der von der Basisstation zum Senden einer Direktzugriffs-Antwortnachricht an das Endgerät zu verwenden ist, und
wobei der Sender zum Senden der Direktzugriffsnachricht an die Basisstation unter Verwendung der bestimmten Direktzugriffs-Sendeparameter ausgebildet ist, und
wobei der Empfänger zum Überwachen von Funkressourcen auf eingehende Datensendungen und eine Direktzugriffs-Antwortnachricht basierend auf dem Hilfsträgerabstand ausgebildet ist, auf dessen Basis der Prozessor die Direktzugriffs-Sendeparameter bestimmt hat,
wobei der Empfänger zum Empfangen der Direktzugriffs-Antwortnachricht von der Basisstation basierend auf dem Hilfsträgerabstand ausgebildet ist, auf dessen Basis der Prozessor die Direktzugriffs-Sendeparameter bestimmt hat.

8. Endgerät nach einem der Ansprüche 1 bis 7, wobei die Verbindung zwischen Direktzugriffs-Sendeparametern und der Vielzahl von Direktzugriffsereignissen derart ist, dass einige, aber nicht alle der Vielzahl von Direktzugriffsereignissen mit unterschiedlichen Direktzugriffs-Sendeparametern verbunden sind und dass die verbleibenden Direktzugriffsereignisse mit gemeinsamen Direktzugriffs-Sendeparametern verbunden sind,
der Prozessor bei Ausgelöstwerden durch eines der verbleibenden Direktzugriffsereignisse zum Bestimmen der gemeinsamen Direktzugriffs-Sendeparameter ausgebildet ist,
der Sender zum Senden einer zweiten Direktzugriffsnachricht an die Basisstation unter Verwendung der bestimmten gemeinsamen Direktzugriffs-Sendeparameter ausgebildet ist,
der Empfänger zum Empfangen von der Basisstation, als Reaktion auf die gesendete zweite Direktzugriffsnachricht, einer zweiten Direktzugriffs-Antwortnachricht, die einen Backoff-Index umfasst, ausgebildet ist,
der Prozessor zum Bestimmen eines Backoff-Zeitwerts, der eine Zeitdauer angibt, die das Endgerät wenigstens warten muss, bevor es einen weiteren Direktzugriffs-Kanalvorgang einleitet, basierend auf dem empfangenen Backoff-Index und einer Backoff-Indextabelle, die unterschiedliche Backoff-Zeitwerte mit Backoff-Indizes und den verbleibenden Direktzugriffsereignissen verbindet, die das Senden einer Direktzugriffsnachricht auslösen können, ausgebildet ist.

9. Endgerät nach einem der Ansprüche 1 bis 8, wobei die Vielzahl von Direktzugriffsereignissen eines oder mehrere der folgenden Elemente umfasst:
• Erstzugriff von RRCJDLE;
• Verbindungswiederherstellungs-Vorgang;
• Handover;
• Downlink-Daten-Eingang, der vom Endgerät das Ausführen eines Direktzugriffs-Kanalvorgangs erfordert;
• Uplink-Daten-Eingang, der vom Endgerät das Ausführen eines Direktzugriffs-Kanalvorgangs erfordert;
• Zustandsübergang von einem inaktiven Zustand in einen verbundenen Zustand;
• Wiederherstellung nach einem Sendefehler, und/oder
wobei die Direktzugriffsnachricht als erste Nachricht eines Random-Access-Channel-(RACH-)Vorgangs gesendet wird, das vom Endgerät mit der Basisstation ausgeführt wird,
wobei der RACH-Vorgang optional aus vier Schritten besteht und der Endgerät-Paketduplizierungsstatus zusammen mit einer beliebigen Signalisierungsnachricht des RACH-Vorgangs gesendet wird,
wobei der RACH-Vorgang optional aus zwei Schritten besteht und der Endgerät-Paketduplizierungsstatus zusammen mit einer RACH-Präambel und einer Handover-abgeschlossen-Nachricht des RACH-Vorgangs gesendet wird.

10. Basisstation umfassend:
einen Empfänger, der zum Empfangen einer Direktzugriffsnachricht von einem Endgerät, das sich in der Funkzelle eines von der Basisstation gesteuerten Mobilkommunikationssystems befindet, ausgebildet ist, wobei die Direktzugriffsnachricht vom Endgerät bei Auslösen von einem einer Vielzahl von Direktzugriffsereignissen gesendet wird,
einen Prozessor, der ausgebildet ist zum
Bestimmen von Direktzugriffs-Sendeparametern, die vom Endgerät zum Senden der Direktzugriffsnachricht verwendet werden, und zum
Bestimmen des einen Direktzugriffsereignisses, das die Direktzugriffsnachricht ausgelöst hat, basierend auf den bestimmten Direktzugriffs-Sendeparametern und Direktzugriffs-Konfigurationsinformationen,
wobei die Direktzugriffs-Konfigurationsinformationen jedes der Vielzahl von Direktzugriffsereignissen mit einer Menge von Direktzugriffs-Sendeparametern aus einer Vielzahl von Direktzugriffs-Sendeparametern verbindet, die vom Endgerät zum Senden der Direktzugriffsnachricht an die Basisstation verwendbar ist, und
den Prozessor, der zum Bestimmen, basierend auf dem bestimmten Direktzugriffsereignis, eines Backoff-Parameters ausgebildet ist, der vom Endgerät zu verwenden ist, um einen Zeitraum zu bestimmen, den das Endgerät wenigstens warten muss, bevor sie einen weiteren Direktzugriffs-Kanalvorgang einleitet,
einen Sender, der zum Senden, als Reaktion auf die gesendete Direktzugriffsnachricht, einer Direktzugriffs-Antwortnachricht an das Endgerät, die den bestimmten Backoff-Parameter umfasst, ausgebildet ist,
den Sender, der zum Senden von einem Teil der Direktzugriffs-Konfigurationsinformationen von der Basisstation innerhalb der von der Basisstation in der Funkzelle gesendeten Mindestsysteminformation und zum Senden von einem weiteren Teil der Direktzugriffs-Konfigurationsinformationen in einer dedizierten Nachricht, die von der Basisstation gesendet wird und an das Endgerät gerichtet ist, ausgebildet ist.

11. Basisstation nach Anspruch 10, wobei der Sender zum Senden der Direktzugriffs-Konfigurationsinformationen in seiner Funkzelle ausgebildet ist.

12. Von einem Endgerät ausgeführtes Verfahren, umfassend die Schritte zum:
bei Auslösung durch eines einer Vielzahl von Direktzugriffsereignissen Bestimmen von Direktzugriffs-Sendeparametern, die für das Senden einer Direktzugriffsnachricht an eine Basisstation zu verwenden sind, die eine Funkzelle eines Mobilkommunikationssystems steuert, in dem sich das Endgerät befindet,
wobei wenigstens ein Teil der Direktzugriffs-Sendeparameter basierend auf dem Direktzugriffsereignis, welches das Senden der Direktzugriffsnachricht ausgelöst hat, und auf Direktzugriffs-Konfigurationsinformationen bestimmt wird, wobei die Direktzugriffs-Konfigurationsinformationen jedes der Vielzahl von Direktzugriffsereignissen mit einer Menge von Direktzugriffs-Sendeparametern aus einer Vielzahl von Direktzugriffs-Sendeparametern verbindet, die vom Endgerät zum Senden einer Direktzugriffsnachricht an die Basisstation verwendbar sind, und
wobei der wenigstens eine Teil der Direktzugriffs-Sendeparameter wenigstens ein oder mehrere der folgenden Elemente umfasst:
• eine Direktzugriffs-Präambelsequenz, die mit der Direktzugriffsnachricht gesendet wird,
• Zeit und Frequenz von Funkkanalressourcen, die vom Endgerät beim Senden der Direktzugriffsnachricht an die Basisstation zu verwenden sind,
wobei das Verbinden zwischen dem wenigstens einen Teil der Direktzugriffs-Sendeparameter der Vielzahl von Direktzugriffsereignissen derart ist, dass jedes Direktzugriffsereignis mit unterschiedlichen Direktzugriffs-Sendeparametern verbunden ist, wobei die Verbindung derart ist, dass die Basisstation anhand der vom Endgerät zum Senden der Direktzugriffsnachricht verwendeten Direktzugriffs-Sendeparameter eindeutig das eine Direktzugriffsereignis bestimmen kann, welches das Senden der Direktzugriffsnachricht ausgelöst hat, und
Senden der Direktzugriffsnachricht an die Basisstation unter Verwendung der bestimmten Direktzugriffs-Sendeparameter,
Empfangen von einem Teil der Direktzugriffs-Konfigurationsinformationen von der Basisstation innerhalb der von der Basisstation in der Funkzelle gesendeten Mindestsysteminformation und Empfangen von einem weiteren Teil der Direktzugriffs-Konfigurationsinformationen in einer dedizierten Nachricht, die von der Basisstation gesendet wird und an das Endgerät gerichtet ist.

13. Von einer Basisstation ausgeführtes Verfahren, umfassend die Schritte zum:
Empfangen einer Direktzugriffsnachricht von einem Endgerät, das sich in der Funkzelle eines von der Basisstation gesteuerten Mobilkommunikationssystems befindet, wobei die Direktzugriffsnachricht vom Endgerät bei Auslösen von einem einer Vielzahl von Direktzugriffsereignissen gesendet wird,
Bestimmen von Direktzugriffs-Sendeparametern, die vom Endgerät zum Senden der Direktzugriffsnachricht verwendet werden, und
Bestimmen des einen Direktzugriffsereignisses, das die Direktzugriffsnachricht ausgelöst hat, basierend auf den bestimmten Direktzugriffs-Sendeparametern und Direktzugriffs-Konfigurationsinformationen,
wobei die Direktzugriffs-Konfigurationsinformationen jedes der Vielzahl von Direktzugriffsereignissen mit einer Menge von Direktzugriffs-Sendeparametern aus einer Vielzahl von Direktzugriffs-Sendeparametern verbindet, die vom Endgerät zum Senden der Direktzugriffsnachricht an die Basisstation verwendbar ist, und
Bestimmen, basierend auf dem bestimmten Direktzugriffsereignis, eines Backoff-Parameters, der vom Endgerät zu verwenden ist, um einen Zeitraum zu bestimmen, den das Endgerät wenigstens warten muss, bevor sie einen weiteren Direktzugriffs-Kanalvorgang einleitet,
Senden, als Reaktion auf die gesendete Direktzugriffsnachricht, einer Direktzugriffs-Antwortnachricht an das Endgerät, die den bestimmten Backoff-Parameter umfasst,
Senden von einem Teil der Direktzugriffs-Konfigurationsinformationen von der Basisstation innerhalb der von der Basisstation in der Funkzelle gesendeten Mindestsysteminformation und Senden von einem weiteren Teil der Direktzugriffs-Konfigurationsinformationen in einer dedizierten Nachricht, die von der Basisstation gesendet wird und an das Endgerät gerichtet ist.

## Revendications

1. Équipement utilisateur comprenant :
un processeur qui, lorsqu'il est déclenché par l'un d'une pluralité d'événements d'accès aléatoire, est configuré pour déterminer des paramètres de transmission d'accès aléatoire destinés à être utilisés pour transmettre un message d'accès aléatoire à une station de base qui commande une cellule radio d'un système de communication mobile dans lequel se trouve l'équipement utilisateur,
dans lequel au moins une partie des paramètres de transmission d'accès aléatoire est déterminée sur la base de l'événement d'accès aléatoire qui a déclenché la transmission du message d'accès aléatoire et sur la base d'informations de configuration d'accès aléatoire, dans lequel les informations de configuration d'accès aléatoire associent chacun des événements d'accès aléatoire à un ensemble de paramètres de transmission d'accès aléatoire parmi une pluralité de paramètres de transmission d'accès aléatoire utilisables par l'équipement utilisateur pour transmettre un message d'accès aléatoire à la station de base, et
dans lequel ladite au moins une partie des paramètres de transmission d'accès aléatoire comprend au moins l'un ou plusieurs des éléments suivants :
a une séquence de préambule d'accès aléatoire, transmise avec le message d'accès aléatoire,
• l'heure et la fréquence des ressources de canal radio, destinées à être utilisées par l'équipement utilisateur lors de la transmission du message d'accès aléatoire à la station de base,
dans lequel l'association entre ladite au moins une partie des paramètres de transmission d'accès aléatoire et la pluralité d'événements d'accès aléatoire est telle que chaque événement d'accès aléatoire est associé à des paramètres de transmission d'accès aléatoire différents, dans lequel l'association est telle que la station de base peut déterminer sans ambiguïté l'événement d'accès aléatoire qui a déclenché la transmission du message d'accès aléatoire à partir des paramètres de transmission d'accès aléatoire utilisés par l'équipement utilisateur (UE) pour transmettre le message d'accès aléatoire, et
un émetteur, qui est configuré pour transmettre le message d'accès aléatoire à la station de base en utilisant les paramètres de transmission d'accès aléatoire déterminés,
un récepteur, configuré pour recevoir une partie des informations de configuration d'accès aléatoire provenant de la station de base dans le cadre des informations système minimales diffusées par la station de base dans la cellule radio, et pour recevoir une autre partie des informations de configuration d'accès aléatoire dans un message dédié transmis depuis la station de base et adressé à l'équipement utilisateur.

2. Équipement utilisateur selon la revendication 1,
dans lequel la partie des paramètres de transmission d'accès aléatoire est associée à l'un des éléments suivants ou à une combinaison de deux ou plusieurs d'entre eux :
• un événement d'accès aléatoire, déclenchant la transmission d'un message d'accès aléatoire,
• un service utilisateur actuellement utilisé par l'équipement utilisateur, éventuellement dans lequel ce service utilisateur peut être, soit une communication de type machine à grande échelle (mMTC), soit un haut débit mobile amélioré (eMBB), soit une communication ultrafiable à faible latence (URLLC),
• un agencement contractuel sous lequel l'équipement utilisateur est exploité par un utilisateur, tel que des exigences respectives en matière de qualité de service à satisfaire,
• un espacement entre sous-porteuses définissant la distance de fréquence entre deux sous-porteuses contiguës.

3. Équipement utilisateur selon la revendication 1 ou 2, dans lequel une partie des paramètres de transmission d'accès aléatoire est associée à une combinaison d'un ou plusieurs des événements d'accès aléatoire et d'un ou plusieurs des services utilisateur, et/ou
une autre partie des paramètres de transmission d'accès aléatoire est associée à une combinaison d'un ou plusieurs des événements d'accès aléatoire et d'un accord contractuel.

4. Équipement utilisateur selon l'une quelconque des revendications 1 à 3, comprenant en outre :
le récepteur, qui est configuré pour recevoir les informations de configuration d'accès aléatoire provenant de la station de base dans le cadre d'informations système diffusées par la station de base dans la cellule radio, ou
le récepteur, qui est configuré pour recevoir l'autre partie des informations de configuration d'accès aléatoire dans des informations système supplémentaires, ces informations supplémentaires sur le système étant transmises par la station de base dans la cellule radio à la demande, dans lequel, éventuellement, dans lequel ladite partie des informations de configuration d'accès aléatoire comprend des informations sur l'association d'un ou plusieurs événements d'accès aléatoire importants à un ensemble respectif de paramètres de transmission d'accès aléatoire.

5. Équipement utilisateur selon l'une quelconque des revendications 1 à 4,
dans lequel le processeur est configuré pour déterminer une valeur de puissance d'émission sur la base de l'événement d'accès aléatoire ayant déclenché la transmission et sur la base des informations de configuration d'accès aléatoire, et
dans lequel l'émetteur est configuré pour transmettre le message d'accès aléatoire sur la base de la valeur de puissance d'émission déterminée.

6. Équipement utilisateur selon l'une quelconque des revendications 1 à 5, dans lequel le récepteur est configuré pour recevoir de la station de base, en réponse au message d'accès aléatoire transmis, un message de réponse d'accès aléatoire incluant un paramètre de recul devant être utilisé par l'équipement utilisateur pour déterminer une durée pendant laquelle l'équipement utilisateur doit au moins attendre avant de lancer une autre procédure de canal d'accès aléatoire,
dans lequel, éventuellement, le paramètre de recul est déterminé par la station de base pour l'équipement utilisateur en fonction du message d'accès aléatoire transmis par l'équipement utilisateur à la station de base et en fonction des informations de configuration d'accès aléatoire.

7. Équipement utilisateur selon l'une quelconque des revendications 1 à 6, dans lequel le processeur est configuré pour déterminer, sur la base des informations de configuration d'accès aléatoire, des paramètres de transmission d'accès aléatoire associés à un espacement entre sous-porteuses, qui doivent être utilisés par la station de base pour transmettre un message de réponse d'accès aléatoire à l'équipement utilisateur, et
dans lequel l'émetteur est configuré pour transmettre le message d'accès aléatoire à la station de base en utilisant les paramètres de transmission d'accès aléatoire déterminés, et
dans lequel le récepteur est configuré pour surveiller les ressources radio en vue de la transmission de données entrantes et d'un message de réponse d'accès aléatoire sur la base de l'espacement des sous-porteuses à partir duquel le processeur a déterminé les paramètres de transmission d'accès aléatoire,
dans lequel le récepteur est configuré pour recevoir le message de réponse d'accès aléatoire provenant de la station de base sur la base de l'espacement des sous-porteuses à partir duquel le processeur a déterminé les paramètres de transmission d'accès aléatoire.

8. Équipement utilisateur selon l'une quelconque des revendications 1 à 7, dans lequel l'association entre les paramètres de transmission d'accès aléatoire et la pluralité d'événements d'accès aléatoire est telle que certains, mais pas tous, des événements d'accès aléatoire de la pluralité sont associés à des paramètres de transmission d'accès aléatoire différents, et telle que les événements d'accès aléatoire restants sont associés à des paramètres de transmission d'accès aléatoire communs,
le processeur, lorsqu'il est déclenché par l'un des événements d'accès aléatoire restants, est configuré pour déterminer les paramètres de transmission d'accès aléatoire communs,
l'émetteur est configuré pour transmettre un deuxième message d'accès aléatoire à la station de base en utilisant les paramètres de transmission d'accès aléatoire communs déterminés,
le récepteur est configuré pour recevoir de la station de base, en réponse au deuxième message d'accès aléatoire transmis, un deuxième message de réponse d'accès aléatoire incluant un indice de recul,
le processeur est configuré pour déterminer une valeur de temps de recul, indiquant une durée minimale pendant laquelle l'équipement utilisateur doit attendre avant de lancer une autre procédure de canal d'accès aléatoire, sur la base de l'indice de retrait reçu et d'un tableau d'indices de retrait, qui associe différentes valeurs de temps de retrait à des indices de retrait et aux événements d'accès aléatoire restants susceptibles de déclencher la transmission d'un message d'accès aléatoire.

9. Équipement utilisateur selon l'une quelconque des revendications 1 à 8, dans lequel la pluralité d'événements d'accès aléatoire comprennent un ou plusieurs des éléments suivants :
• accès initial à partir de RRC_IDLE ;
• une procédure de rétablissement de connexion ;
• un transfert ;
• l'arrivée de données en liaison descendante qui nécessite que l'équipement utilisateur exécute une procédure de canal d'accès aléatoire ;
• l'arrivée de données en liaison montante qui nécessite que l'équipement utilisateur exécute une procédure de canal d'accès aléatoire ;
• une transition d'état d'un état inactif vers un état connecté ;
• une récupération suite à une défaillance de faisceau, et/ou
dans lequel le message d'accès aléatoire est transmis en tant que premier message d'une procédure de canal d'accès aléatoire (RACH) effectuée par l'équipement utilisateur avec la station de base,
éventuellement, dans lequel la procédure RACH comprend quatre étapes, et l'état de duplication des paquets de l'équipement utilisateur est transmis conjointement avec tout message de signalisation de la procédure RACH,
éventuellement, dans lequel la procédure RACH comprend deux étapes, et l'état de duplication des paquets de l'équipement utilisateur est transmis conjointement avec un préambule RACH et un message de transfert achevé de la procédure RACH.

10. Station de base comprenant :
un récepteur, qui est configuré pour recevoir un message d'accès aléatoire provenant d'un équipement utilisateur situé dans la cellule radio d'un système de communication mobile commandé par la station de base, le message d'accès aléatoire étant transmis par l'équipement utilisateur lorsqu'il est déclenché par l'un d'une pluralité d'événements d'accès aléatoire,
un processeur, configuré pour
déterminer les paramètres de transmission d'accès aléatoire utilisés par l'équipement utilisateur pour transmettre le message d'accès aléatoire, et pour
déterminer l'événement d'accès aléatoire qui a déclenché le message d'accès aléatoire sur la base des paramètres de transmission d'accès aléatoire déterminés et des informations de configuration d'accès aléatoire,
dans lequel les informations de configuration d'accès aléatoire associent chacun de la pluralité d'événements d'accès aléatoire à un ensemble de paramètres de transmission d'accès aléatoire parmi une pluralité de paramètres de transmission d'accès aléatoire utilisables par l'équipement utilisateur pour transmettre le message d'accès aléatoire à la station de base, et
le processeur, qui est configuré pour déterminer, sur la base de l'événement d'accès aléatoire déterminé, un paramètre de retrait devant être utilisé par l'équipement utilisateur pour déterminer une durée pendant laquelle l'équipement utilisateur doit au moins attendre avant de lancer une autre procédure de canal d'accès aléatoire,
un émetteur, qui est configuré pour transmettre, en réponse au message d'accès aléatoire transmis, un message de réponse d'accès aléatoire à l'équipement utilisateur qui inclut le paramètre de retrait déterminé,
l'émetteur, qui est configuré pour transmettre une partie des informations de configuration d'accès aléatoire provenant de la station de base au sein des informations système minimales diffusées par la station de base dans la cellule radio, et pour transmettre une autre partie des informations de configuration d'accès aléatoire dans un message dédié émis depuis la station de base et adressé à l'équipement utilisateur.

11. Station de base selon la revendication 10, dans laquelle l'émetteur est configuré pour diffuser les informations de configuration d'accès aléatoire dans sa cellule radio.

12. Procédé mis en œuvre par un équipement utilisateur, comprenant les étapes consistant à :
lorsqu'il est déclenché par l'un d'une pluralité d'événements d'accès aléatoire, déterminer des paramètres de transmission d'accès aléatoire destinés à être utilisés pour transmettre un message d'accès aléatoire à une station de base qui commande une cellule radio d'un système de communication mobile dans lequel se trouve l'équipement utilisateur,
dans lequel au moins une partie des paramètres de transmission d'accès aléatoire est déterminée sur la base de l'événement d'accès aléatoire qui a déclenché la transmission du message d'accès aléatoire et sur la base d'informations de configuration d'accès aléatoire, dans lequel les informations de configuration d'accès aléatoire associent chacun des événements d'accès aléatoire à un ensemble de paramètres de transmission d'accès aléatoire parmi une pluralité de paramètres de transmission d'accès aléatoire utilisables par l'équipement utilisateur pour transmettre un message d'accès aléatoire à la station de base, et
dans lequel ladite au moins une partie des paramètres de transmission d'accès aléatoire comprend au moins l'un ou plusieurs des éléments suivants :
• une séquence de préambule d'accès aléatoire, transmise avec le message d'accès aléatoire,
• l'heure et la fréquence des ressources de canal radio, destinées à être utilisées par l'équipement utilisateur lors de la transmission du message d'accès aléatoire à la station de base,
dans lequel l'association entre ladite au moins une partie des paramètres de transmission d'accès aléatoire et la pluralité d'événements d'accès aléatoire est telle que chaque événement d'accès aléatoire est associé à des paramètres de transmission d'accès aléatoire différents, dans lequel l'association est telle que la station de base peut déterminer sans ambiguïté l'événement d'accès aléatoire qui a déclenché la transmission du message d'accès aléatoire à partir des paramètres de transmission d'accès aléatoire utilisés par l'équipement utilisateur (UE) pour transmettre le message d'accès aléatoire, et
transmettre le message d'accès aléatoire à la station de base à l'aide des paramètres de transmission d'accès aléatoire déterminés,
recevoir une partie des informations de configuration d'accès aléatoire provenant de la station de base dans le cadre des informations système minimales diffusées par la station de base dans la cellule radio, et recevoir une autre partie des informations de configuration d'accès aléatoire dans un message dédié transmis depuis la station de base et adressé à l'équipement utilisateur.

13. Procédé mis en œuvre par une station de base, comprenant les étapes consistant à :
recevoir un message d'accès aléatoire provenant d'un équipement utilisateur situé dans la cellule radio d'un système de communication mobile commandé par la station de base, le message d'accès aléatoire étant transmis par l'équipement utilisateur lorsqu'il est déclenché par l'un d'une pluralité d'événements d'accès aléatoire,
déterminer les paramètres de transmission d'accès aléatoire utilisés par l'équipement utilisateur pour transmettre le message d'accès aléatoire, et
déterminer l'événement d'accès aléatoire qui a déclenché le message d'accès aléatoire sur la base des paramètres de transmission d'accès aléatoire déterminés et des informations de configuration d'accès aléatoire,
dans lequel les informations de configuration d'accès aléatoire associent chacun de la pluralité d'événements d'accès aléatoire à un ensemble de paramètres de transmission d'accès aléatoire parmi une pluralité de paramètres de transmission d'accès aléatoire utilisables par l'équipement utilisateur pour transmettre le message d'accès aléatoire à la station de base, et
déterminer, sur la base de l'événement d'accès aléatoire déterminé, un paramètre de retrait devant être utilisé par l'équipement utilisateur pour déterminer une durée pendant laquelle l'équipement utilisateur doit au moins attendre avant de lancer une autre procédure de canal d'accès aléatoire,
transmettre, en réponse au message d'accès aléatoire transmis, un message de réponse d'accès aléatoire à l'équipement utilisateur qui inclut le paramètre de retrait déterminé,
transmettre une partie des informations de configuration d'accès aléatoire depuis la station de base dans le cadre des informations système minimales diffusées par la station de base dans la cellule radio, et transmettre une autre partie des informations de configuration d'accès aléatoire dans un message dédié émis depuis la station de base et adressé à l'équipement utilisateur.
